(19) Europäisches Patentamt
European Patent Office
Office européen des brevets

(11) **EP 4 155 780 A1**

(12) **EUROPEAN PATENT APPLICATION**
published in accordance with Art. 153(4) EPC

(43) Date of publication:
**29.03.2023   Bulletin 2023/13**

(21) Application number: **21807624.8**

(22) Date of filing: **26.04.2021**

(51) International Patent Classification (IPC):
*G01S 19/48* (2010.01)     *B61L 25/02* (2006.01)
*G01S 19/52* (2010.01)

(52) Cooperative Patent Classification (CPC):
**B60L 15/40; B61L 25/02; G01S 19/28;**
**G01S 19/48; G01S 19/50; G01S 19/52**

(86) International application number:
**PCT/JP2021/016574**

(87) International publication number:
**WO 2021/235178 (25.11.2021 Gazette 2021/47)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.05.2020   JP 2020089886**

(71) Applicants:
• **KABUSHIKI KAISHA TOSHIBA**
  **Minato-ku**
  **Tokyo**
  **105-0023 (JP)**
• **Toshiba Infrastructure Systems &**
  **Solutions Corporation**
  **Kawasaki-shi, Kanagawa 212-0013 (JP)**

(72) Inventors:
• **OODAKE, Tatsuya**
  **Kawasaki-shi, Kanagawa 212-0013 (JP)**
• **KOBAYASHI, Hiroyuki**
  **Kawasaki-shi, Kanagawa 212-0013 (JP)**
• **SETO, Naoto**
  **Kawasaki-shi, Kanagawa 212-0013 (JP)**
• **YAMASAKI, Yoshiaki**
  **Kawasaki-shi, Kanagawa 212-0013 (JP)**
• **TAKAHASHI, Yusuke**
  **Kawasaki-shi, Kanagawa 212-0013 (JP)**
• **KATO, Noriyasu**
  **Kawasaki-shi, Kanagawa 212-0013 (JP)**
• **HATTORI, Yohei**
  **Kawasaki-shi, Kanagawa 212-0013 (JP)**

(74) Representative: **AWA Sweden AB**
**Junkersgatan 1**
**582 35 Linköping (SE)**

(54) **POSITION MEASUREMENT DEVICE, SPEED MEASUREMENT DEVICE, AND POSITION MEASUREMENT METHOD**

(57)     A position measurement device according to an embodiment is a position measurement device that measures a position of a vehicle, and includes a first positioning portion, a second positioning portion, and a determination portion. The first positioning portion receives a positioning signal from a satellite and measures a first position of the vehicle. The second positioning portion measures a second position of the vehicle based on an output of a sensor for autonomous positioning. The determination portion sets the second position as the position of the vehicle at least either when the first position is in a range based on a predetermined position or when change in a proceeding direction of the vehicle is a predetermined amount.

FIG. 2

Processed by Luminess, 75001 PARIS (FR)

## Description

Field

Embodiments of the present invention relate to a position measurement device, a speed measurement device, and position measurement method.

Background

A device performing position measurement and speed measurement at the same time and improvement of accuracy thereof are required for autonomous driving for railroads. In measurement of a train position, detection of an on-rail train in a signal section is generally performed by detecting passage of the train over a ground coil. In speed measurement, a method of measuring a speed by frequency conversion by a speed generator (a tachometer generator, hereinafter, TG) is used, in general.

A method is also known which performs position measurement using a positioning radio wave signal transmitted from an artificial satellite. In this case, however, measurement accuracy is $\pm 10$ m at the maximum due to a problem of a multipath or the like in an environment along a railroad, and the measurement accuracy becomes low as position measurement for autonomous driving. Further, there is a possibility that a traveling position cannot be ascertained also in a region where satellite reception is not available, for example, in tunnels, under station buildings on bridges or the like, and in underground sections.

Citation List

Patent Literatures

Patent Literature 1: Japanese Patent Application Laid-open No. 2010-100239

Patent Literature 2: Japanese Patent Publication No. 5973024

Patent Literature 3: Japanese Patent Publication No. 4121897

Patent Literature 4: Japanese Patent Publication No. 5185575

Summary

Technical Problem

To provide a position measurement device, a speed measurement device, and position measurement method that can further improve the measurement accuracy.

Solution to Problem

A position measurement device according to the present embodiment is a position measurement device that measures a position of a vehicle and comprises a first positioning portion, a second positioning portion, and a determination portion. The first positioning portion is configured to receive a positioning signal from a satellite and measure a first position of the vehicle. The second positioning portion is configured to measure a second position of the vehicle based on an output of a sensor for autonomous positioning. The determination portion is configured to set the second position to the position of the vehicle at least either when the first position is in a range based on a predetermined position or when change in a proceeding direction of the vehicle is a predetermined amount.

Brief Description of Drawings

[FIG. 1] FIG. 1 is a block diagram of a schematic configuration of a traveling position detection system 10 according to a first embodiment.

[FIG. 2] FIG. 2 is a block diagram of a functional configuration of a reception operation processing device according to the first embodiment.

[FIG. 3] FIG. 3 is a flowchart of processing by a positioning-signal operation processing portion according to the first embodiment.

[FIG. 4] FIG. 4 is a diagram schematically illustrating a processing environment in a case where an invisible region is set.

[FIG. 5] FIG. 5 is a flowchart of processing of satellite reception control and processing of determining autonomous-measurement switching (part 1).

[FIG. 6] FIG. 6 is a flowchart of a branch process A.

[FIG. 7] FIG. 7 is a flowchart of a branch process D.

[FIG. 8] FIG. 8 is a flowchart of processing of satellite reception control and processing of determining autonomous-measurement switching (part 2).

[FIG. 9] FIG. 9 is a diagram schematically illustrating a processing environment in a case of detecting the invisible region based on positioning radio wave signals.

[FIG. 10] FIG. 10 is a flowchart of another branch process D.

[FIG. 11] FIG. 11 is a flowchart in a case of using the process illustrated in FIG. 10.

[FIG. 12] FIG. 12 is a diagram schematically illustrating a processing environment in a case of switching to the invisible region based on map data and information of the positioning radio wave signals.

[FIG. 13] FIG. 13 is a flowchart of a still another branch process D.

[FIG. 14] FIG. 14 is a flowchart in a case of using the process illustrated in FIG. 13.

[FIG. 15] FIG. 15 is a flowchart of processing of reception satellite control.

[FIGS. 16] FIGS. 16 are explanatory diagrams of a reception state of positioning information.

[FIG. 17] FIG. 17 is a diagram illustrating a setting example of reception-effective area 7 and a reception-ineffective area in a case of speed measurement.

[FIG. 18] FIG. 18 is an explanatory diagram of a process of selecting an artificial satellite.

[FIGS. 19] FIGS. 19 are explanatory diagrams of elevation angle control.

[FIG. 20] FIG. 20 is a flowchart of processing of a traveling-state determination processing portion.

[FIG. 21] FIG. 21 is a flowchart of processing of a vehicle-position correction portion.

[FIG. 22] FIG. 22 is a block diagram of a functional configuration of a reception operation processing device according to a second embodiment.

[FIG. 23] FIG. 23 is a flowchart of processing of a vehicle-course prediction calculation portion (part 1).

[FIG. 24] FIG. 24 is a flowchart of processing of the vehicle-course prediction calculation portion (part 2).

[FIG. 25] FIG. 25 is a flowchart of processing of the vehicle-course prediction calculation portion (part 3).

Description of Embodiments

Embodiments of the present invention will now be explained with reference to the accompanying drawings. In the drawings accompanying this specification, for the conveniences of illustration and easier understanding, the scales, horizontal and vertical sizes and the like of constituent elements are illustrated in a modified or exaggerated manner as appropriate with regard to actual products.

(First embodiment)

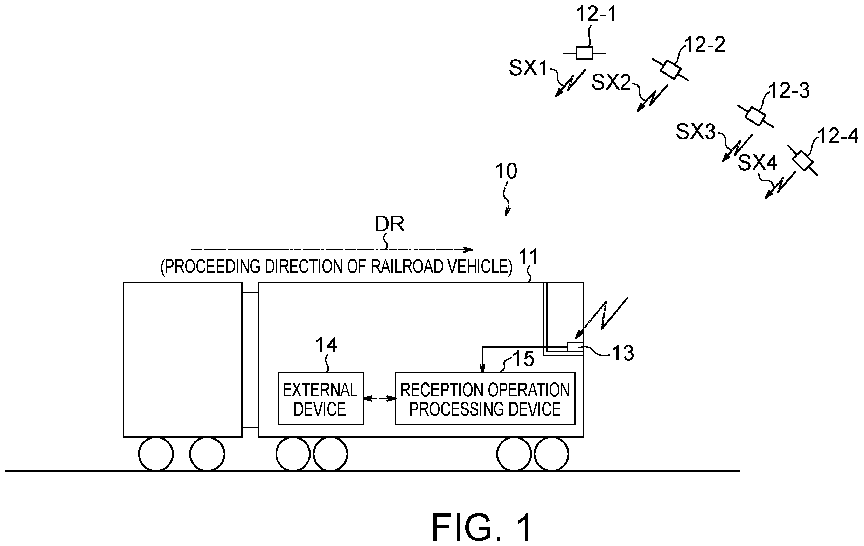

FIG. 1 is a block diagram of a schematic configuration of a traveling position detection system 10 according to a first embodiment. The traveling position detection system 10 is installed in a railroad vehicle 11 and can perform position measurement based on positioning radio wave signals SX1 to SX4 transmitted from transmitters of artificial satellites (or positioning satellites) 12-1 to 12-4. This traveling position detection system 10 includes a receiving antenna device 13, an external device 14, and a reception operation processing device (a position measurement device) 15. Although the present embodiment will be described assuming that n=4 for artificial satellites 12-1 to 12-n, n is not limited thereto. For example, n may be a natural number equal to or larger than 5.

The receiving antenna device 13 is an antenna device that can receive the positioning radio wave signals SX1 to SX4. The external device 14 is a device that controls traveling of the railroad vehicle 11 based on the result of position measurement. Examples of the external device 14 include a train control and management system (TCMS), a driver support control device for autonomous driving, and an on-board monitor. The reception operation processing device 15 performs position measurement processing based on the positioning radio wave signals SX1 to SX4 output from the receiving antenna device 13, and outputs the result of position measurement to the external device 14.

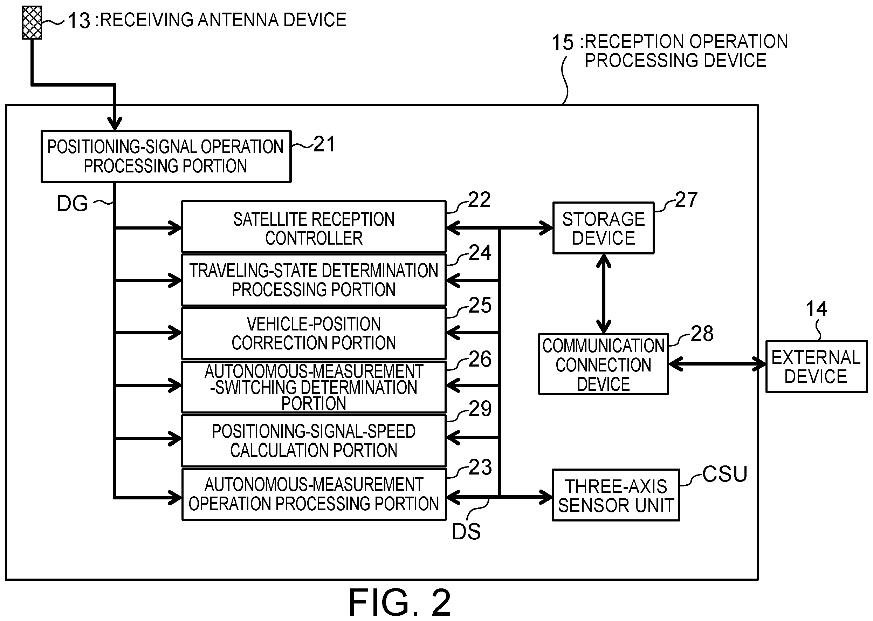

FIG. 2 is a block diagram illustrating a configuration example of the reception operation processing device 15 according to the first embodiment. The reception operation processing device 15 includes a positioning-signal operation processing portion (a first positioning portion) 21, a satellite reception controller 22, an autonomous-measurement operation processing portion (a first measurement portion) 23, a traveling-state determination processing portion 24, a vehicle-position correction portion (a second positioning portion) 25, an autonomous-measurement-switching determination portion (a determination portion) 26, a storage device 27, a communication connection device 28, and a positioning-signal-speed calculation portion (a second measurement portion) 29. In FIG. 2, a three-axis sensor unit CSU is further illustrated. The three-axis sensor unit CSU is a three-axis sensor including, for example, a three-axis acceleration sensor, a three-axis gyro sensor, and a three-axis geomagnetic sensor.

The positioning-signal operation processing portion 21 calculates position coordinates of the railroad vehicle 11 based on the positioning radio wave signals SX1 to SX4 received by the receiving antenna device 13, and outputs a positioning data group DG. The positioning data group DG includes a time, satellite orbit information (for example, satellite almanac information and satellite ephemeris information) included in the positioning radio wave signals SX1 to SX4, reception signal strengths of the positioning radio wave signals SX1 to SX4, the position coordinates of the railroad vehicle 11, and the like.

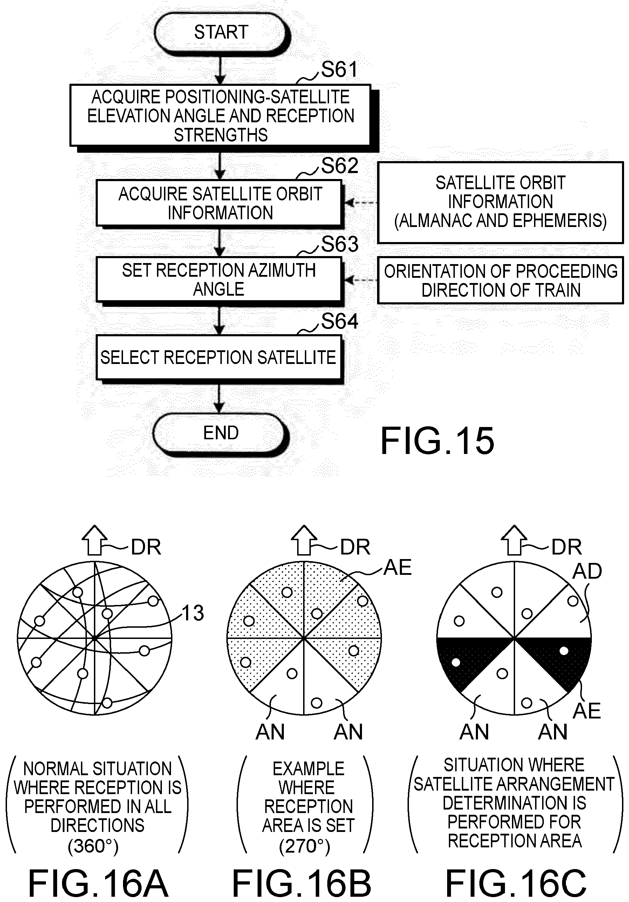

The satellite reception controller 22 performs calculation processing for estimating a position error based on the positioning radio wave signals SX1 to SX4 from the artificial satellites 12-1 to 12-4 and the signal strengths thereof, both included in the positioning data group DG. Accordingly, the satellite reception controller 22 executes, based on the estimated calculation error thus obtained, reception control such as satellite-reception elevation angle control and reception strength control corresponding to that error. Details of the satellite reception controller 22 will be described later with reference to FIGS. 15 to 19.

The autonomous-measurement operation processing portion 23 outputs an autonomous positioning data group DS based on an output of the three-axis sensor unit CSU. The autonomous positioning data group DS includes a time, a speed, a travel vector in the three-axis direction, and the like. That is, the autonomous-measurement operation processing portion 23 performs processing of calculating the speed and the travel vector in the three-axis direction by general calculation methods. For example, the travel vector in the three-axis direction is calculated by integrating an acceleration in the three-axis direction over time based on an output of the three-axis acceleration sensor. Further, the speed can be calculated as, for example, an absolute value of the travel vector in the three-axis direction.

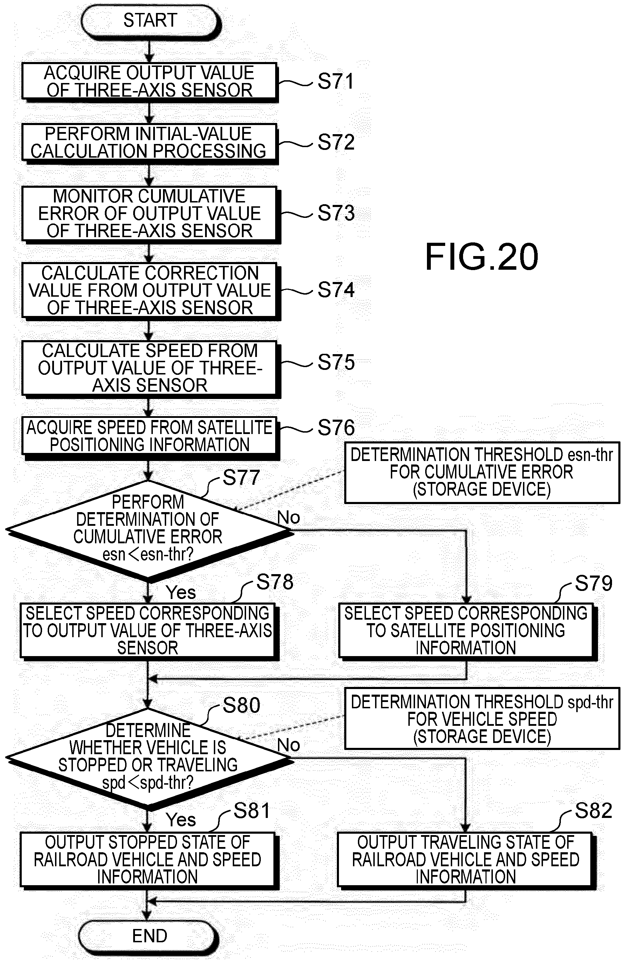

The traveling-state determination processing portion 24 determines a traveling state of the railroad vehicle 11 (which includes speed information and information indicating a stopped state, for example) mainly using the autonomous positioning data group DS. A detailed processing example of the traveling-state determination processing portion 24 will be described later with reference to FIG. 20.

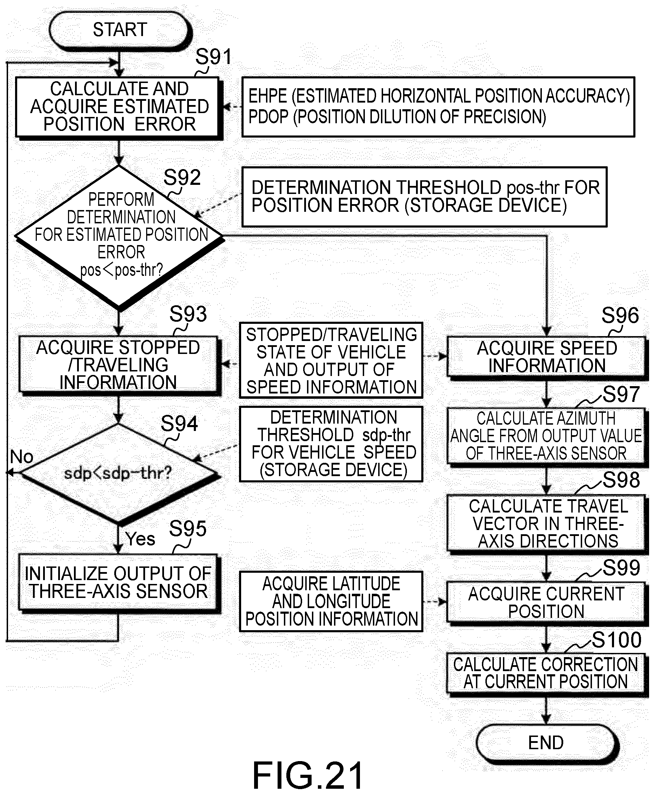

The vehicle-position correction portion 25 performs correction calculation on the position coordinates of the railroad vehicle 11 based on the positioning data group DG, using the information of the autonomous positioning data group DS, and outputs position information of the railroad vehicle 11. That is, the vehicle-position correction portion 25 calculates time-series change of the position coordinates of the railroad vehicle 11 from a reference position, using the information of the autonomous positioning data group DS. This reference position is an average position of positions at which position measurement or autonomous calculation has been performed in the past. For example, the reference position is an average value of past ten measured positions at the time when the railroad vehicle 11 has passed over the same ground coil. Further, a detailed processing example of the vehicle-position correction portion 25 will be described later with reference to FIG. 21.

The autonomous-measurement-switching determination portion 26 determines which of the position coordinates output by the positioning-signal operation processing portion 21 and the position coordinates output by the vehicle-position correction portion 25 is to be set as the position coordinates of the railroad vehicle 11, depending on at least either radio wave states of the positioning radio wave signals SX1 to SX4 or the position of the railroad vehicle 11. For example, the autonomous-measurement-switching determination portion 26 determines whether the railroad vehicle 11 exists in an environment where it cannot capture the artificial satellites 12-1 to 12-4 using the positioning data group DG. When the railroad vehicle 11 exists in the environment where it cannot capture the artificial satellites 12-1 to 12-4, switching to autonomous measurement processing mainly using the position coordinates output by the vehicle-position correction portion 25 is automatically performed.

Further, the autonomous-measurement-switching determination portion 26 stores information indicating a positioning calculation state (State1) or an autonomous measurement processing state (State2) in the storage device 27 with the time. The positioning calculation state is a state where the position coordinates output by the positioning-signal operation processing portion 21 are mainly used, and the autonomous measurement processing state is a state where the position coordinates output by the vehicle-position correction portion 25 are mainly used.

The storage device 27 is implemented by, for example, a RAM (Random Access Memory), a semiconductor memory element such as a flash memory, a hard disk, an optical disk, or the like. The storage device 27 stores therein various kinds of information.

The communication connection device 28 performs communication between the storage device 27 and the external device 14.

The positioning-signal-speed calculation portion 29 calculates a speed of the railroad vehicle 11 using radio waves of the positioning radio wave signals SX1 to SX4. The railroad vehicle 11 may idle and slip during acceleration and during deceleration. Therefore, in general, a speed calculated using the radio waves is higher in accuracy than a speed based on frequency conversion by a speed generator (a tachometer generator) of the railroad vehicle 11.

The positioning-signal-speed calculation portion 29 calculates the speed of the railroad vehicle 11 using the Doppler effect of carrier waves output from the artificial satellites 12-1 to 12-4, for example. Since the carrier wave frequency (the L1 band, fs=1.5754 GHz) of the artificial satellites 12-1 to 12-4 is strictly controlled, this frequency is measured, and a velocity V is calculated by Expression (1). Meanwhile, since the artificial satellites 12-1 to 12-4 move at high speed, a ground speed cannot be obtained from a carrier wave frequency of one artificial satellite only. Therefore, the carrier wave frequencies of the plural (for example, four or more) artificial satellites 12-1 to 12-4 are measured, and the ground speed is calculated. Further, when the railroad vehicle 11 passes through an invisible region, it is impossible to measure the velocity using the carrier wave frequencies, as in the positioning-signal operation processing portion 21.

# [Expression 1]

$$fm = fs \times \frac{\sqrt{1 - (V/c)^2}}{1 - (V/c)\cos\theta}$$

$$\Delta f = fm - fs$$

fm: observed frequency
fs: frequency of signal source
$\Delta f$: amount of frequency change of carrier wave by Doppler effect
V: velocity of signal source when signal source is viewed from observer
$\theta$: moving direction of signal source when signal source is viewed from observer
c: speed of light

(1)

The configuration of the traveling position detection system 10 has been described above. Next, an operation of each component is described.

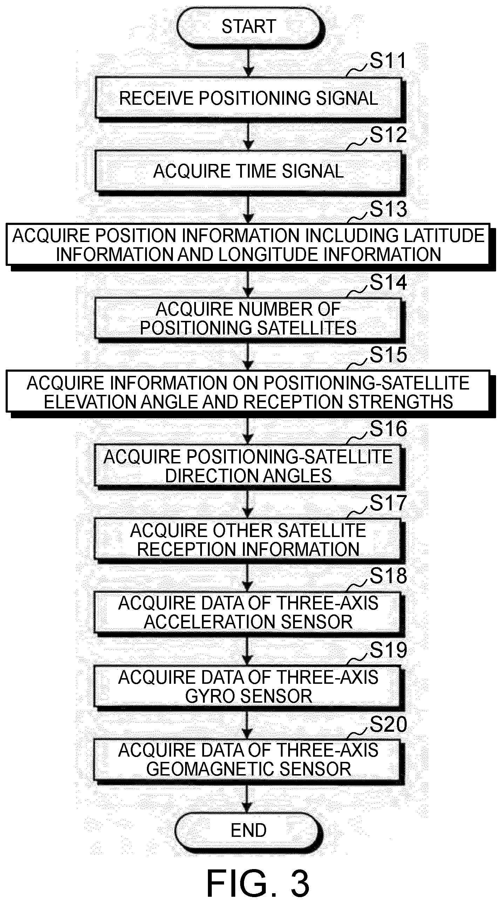

First, a processing example of the positioning-signal operation processing portion 21 and a processing example of the autonomous-measurement operation processing portion 23 are described with reference to FIG. 3. FIG. 3 is a flowchart of processing by the positioning-signal operation processing portion 21 according to the first embodiment.

The positioning-signal operation processing portion 21 of the reception operation processing device 15 receives the positioning radio wave signals SX1 to SX4 via the receiving antenna device 13 (Step S11).

Next, the positioning-signal operation processing portion 21 extracts and acquires a time signal from the positioning radio wave signals SX1 to SX4 (Step S12). Subsequently, the positioning-signal operation processing portion 21 acquires position information including latitude information and longitude information based on satellite orbit information (for example, satellite almanac information and satellite ephemeris information) and the acquired time signal (Step S13).

Details of a method of acquiring the position information are described here. The positioning-signal operation processing portion 21 calculates position coordinates (x, y, z) of the railroad vehicle 11 using, for example, orbit information from the artificial satellites 12-1 to 12-4. That is, the position coordinates (x, y, z) of the railroad vehicle 11 can be calculated from sets of pieces of information on positions of the artificial satellites 12-1 to 12-4 and distances between the artificial satellites 12-1 to 12-4 and the reception operation processing device 15 at that moment. In this case, the coordinates (x, y, z) can be calculated if there are three or more sets of pieces of information on the positions of the artificial satellites and the distances between the artificial satellites and the reception operation processing device 15 at that moment. In addition, the fourth satellite is generally required to ensure time precision.

More specifically, the positioning-signal operation processing portion 21 calculates the position coordinates (x, y, z) of the railroad vehicle 11 by the following Expression (2) based on the satellite orbit information (for example, satellite almanac information and satellite ephemeris information) and the acquired time signal.

In Expression (2), (x, y, z) are parameters of coordinate values of a position to be obtained, and $(x_n, y_n, z_n)$ are parameters of coordinate values of a position of a satellite that transmits a positioning signal. Moreover, t is a parameter of a time of positioning, and $t_n$ is a parameter of a time when the artificial satellites 12-1 to 12-4 have transmitted the positioning signals. The positioning-signal operation processing portion 21 may receive the positioning signal via a base station on the ground or the like. The positioning-signal operation processing portion 21 calculates position information to be detected by the least squares method or the like for these four kinds of parameters.

[Expression 2]

$$\begin{cases} \sqrt{(x-x_1)^2+(y-y_1)^2+(z-z_1)^2} - c(t-t_1) = 0 \\ \sqrt{(x-x_2)^2+(y-y_2)^2+(z-z_2)^2} - c(t-t_2) = 0 \\ \sqrt{(x-x_3)^2+(y-y_3)^2+(z-z_3)^2} - c(t-t_3) = 0 \\ \sqrt{(x-x_4)^2+(y-y_4)^2+(z-z_4)^2} - c(t-t_4) = 0 \end{cases} \quad (2)$$

Subsequently, the positioning-signal operation processing portion 21 acquires the number of positioning satellites based on the calculation result (Step S14). Further, the positioning-signal operation processing portion 21 calculates positioning-satellite elevation angles based on the satellite almanac information and acquires information on the reception strengths of the positioning radio wave signals SX1 to SX4 at a reception time from the receiving antenna device 13 (Step S15). For example, the positioning-signal operation processing portion 21 can calculate the positioning-satellite elevation angles from a relation between the positions of the artificial satellites 12-1 to 12-4 and the position coordinates (x, y, z) of the railroad vehicle 11.

Next, the positioning-signal operation processing portion 21 acquires positioning-satellite direction angles (Step S16). For example, the positioning-signal operation processing portion 21 can calculate the positioning-satellite direction angles from a relation among the positions of the artificial satellites 12-1 to 12-4, the position coordinates (x, y, z) of the railroad vehicle 11, and the direction of the railroad vehicle 11. Further, the positioning-signal operation processing portion 21 acquires other satellite reception information (Step S17). The positioning-signal operation processing portion 21 outputs the positioning data group DG including these pieces of information and stores the group DG in the storage device 27.

Next, the autonomous-measurement operation processing portion 23 acquires an output of a three-axis acceleration sensor from the three-axis sensor unit CSU (Step S18), acquires an output of a three-axis gyro sensor (Step S19), and acquires an output of a three-axis geomagnetic sensor (Step S20). The autonomous-measurement operation processing portion 23 calculates a speed and a travel vector in the three-axis direction, outputs the autonomous positioning data group DS including these pieces of information, and stores the data group DS in the storage device 27 together with the time. At this time, the vehicle-position correction portion (the second positioning portion) 25 calculates the position coordinates of the railroad vehicle 11 based on the autonomous positioning data group DS and stores the position coordinates in the storage device 27 together with the time.

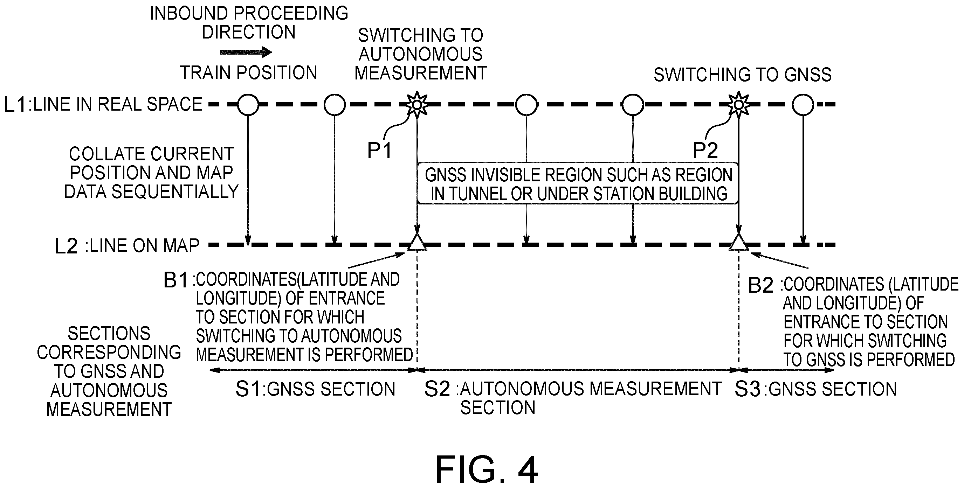

Here, a description is provided with reference to FIGS. 4 to 8, which describes an example of processing of satellite reception control by the satellite reception controller 22 and processing of determining autonomous-measurement switching by the traveling-state determination processing portion 24 in a case where a position with difficulty of receiving the positioning radio wave signals SX1 to SX4, for example, by a tunnel is known. In the following descriptions, equivalent processes are denoted with like numerals and explanations thereof may be omitted.

FIG. 4 is a diagram schematically illustrating a processing environment in a case where an invisible region B1-B2 is set. The railroad vehicle 11 travels on a track of a line L1 in a real space. The railroad vehicle 11 stores therein information on a track of a line L2 on a map and information on the invisible region B1-B2 in advance. FIG. 4 further illustrates GNSS (Global Navigation Satellite System) sections S1 and S3, which are regions other than the invisible region B1-B2, and an autonomous measurement section S2 corresponding to the invisible region B1-B2. In the present embodiment, the invisible region B1-B2 means a region where difficulty of receiving the positioning radio wave signals SX1 to SX4 occurs.

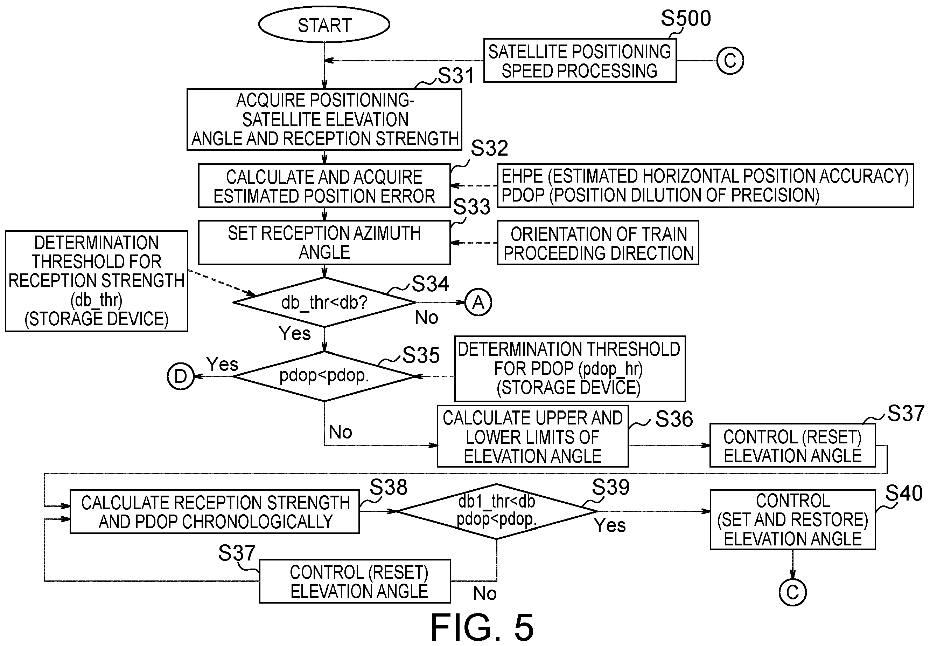

FIG. 5 is a flowchart of processing of satellite reception control and processing of determining autonomous-measurement switching (part 1).

First, the traveling-state determination processing portion 24 acquires a positioning-satellite elevation angle and a reception strength included in the positioning data group DG in the present embodiment (Step S31), as illustrated in FIG. 5.

Next, the positioning-signal operation processing portion 21 calculates an estimated position error, and the travelling-state determination processing portion 24 acquires the estimated position error (Step S32). The positioning-signal operation processing portion 21 calculates a PDOP (Position Dilution of Precision due to geometry of satellites) value as a distance measurement accuracy.

DOP (Dilution of Precision) is an index of a state of arrangement of satellites. A DOP value has a higher correlation with positioning accuracy than the number of satellites, and the positioning accuracy tends to be higher as the DOP value is smaller. Examples of the DOP value include HDOP (Horizontal DOP) which is an index of only a horizontal component of the geometric arrangement of the satellites, VDOP (vertical DOP) which is an index of only a vertical component, and PDOP (Position DOP) combining them. In the present embodiment, the PDOP value is used in normal measurement. Meanwhile, when higher accuracy is required for "height" measurement, the VDOP value may be used. Further, the traveling-state determination processing portion 24 may use an EHPE (estimated horizontal position accuracy) calculated by the positioning-signal operation processing portion 21.

Subsequently, the traveling-state determination processing portion 24 sets a reception azimuth angle based on the acquired proceeding direction of the railroad vehicle 11 (Step S33). The proceeding direction of the railroad vehicle 11 is calculated by the autonomous-positioning operation processing portion (the second positioning portion) 23 based on an output signal from the three-axis sensor unit CSU. Setting of the reception azimuth angle (Step S33) is not always necessary in this stage.

Next, the traveling-state determination processing portion 24 compares a reception strength db obtained by positioning and a determination threshold db_thr for reception strength stored in the storage device 27 with each other (Step S34).

When db_thr<db (Yes at Step S34), this result means that the reception strength is sufficiently strong, and the reception sensitivity is good. Therefore, the process transitions to satellite elevation angle control of a satellite for which reception is performed.

Next, the traveling-state determination processing portion 24 compares a predetermined determination threshold for PDOP pdop_thr read out from the storage device 27 with the PDOP value (pdop) obtained by positioning in order to determine whether elevation angle control is necessary (Step S35).

When pdop≥pdop_thr (No at Step S35), this result means that the position dilution of precision is high, and the accuracy is relatively bad. The traveling-state determination processing portion 24 thus causes the satellite reception controller 22 to calculate upper and lower limits of the elevation angle (Step S36) and controls (resets) the elevation angle (Step S37). In this case, examples of calculation of the upper and lower limits of the elevation angle include a method using parameters of a regression equation obtained from a predetermined elevation angle stored in the storage device 27 and an estimated position error and a method using parameters of a regression equation obtained from the elevation angle and a PDOP value. Any of these methods may be used because these methods are relational expressions that can improve the estimated position error.

Next, the traveling-state determination processing portion 24 causes the processes at Steps S31 and S32 to be performed in chronological order in a predetermined time range to acquire the reception strength and the PDOP value chronologically (Step S38). When a predetermined time has passed, the traveling-state determination processing portion 24 determines whether db1_thr<db1, div<div_thr, and pdop<pdop_thr are satisfied (Step S39). Here, db1 is a mean value of the reception strength, div is a variance of the reception strength, and db1_thr and div_thr are respectively determination thresholds for the mean value of the reception strength and the reception strength. For example, the reception strength greatly varies in regions before and after the invisible region B1-B2 illustrated in FIG. 4, and decreases in the invisible region B1-B2. Therefore, by evaluating values of the mean and variance of the reception strength, it is possible to avoid control (reset) of an elevation angle before and after the invisible region B1-B2 and in the invisible region B1-B2, when the evaluation is low.

When db1_thr<db1, div<div_thr, and pdop<pdop_thr (Yes at Step S39), the traveling-state determination processing portion 24 sets the elevation angle to restore it and repeats the processes from Step S31. In this case, it is determined that the position dilution of precision is high and the signal strength of a satellite in the selected elevation-angle range is high. Therefore, control values of a positioning-satellite elevation angle and a reception strength are changed to the upper and lower limits of the elevation angle which have been reset, and the processes from Step S31 are repeated. At this time, the traveling-state determination processing portion 24 stores information indicating the positioning calculation state (State1) in the storage device 27 together with the time. Further, since it is determined that the position dilution of precision is high and the signal strength of the satellite in the selected elevation-angle range is high, it is possible to preferentially use the position coordinates calculated by the positioning-signal operation processing portion 21 and the speed calculated by the positioning-signal-speed calculation portion 29 as position information of the railroad vehicle 11.

Meanwhile, when db1_thr<db1 and div<div_thr but pdop<pdop_thr (No at Step S39), it is determined that the quality of a reception signal of the satellite in the selected elevation-angle range is low. Therefore, the satellite reception controller 22 is caused to control (reset) the elevation angle (Step S37), and the processes from Step S38 are repeated. When db1_thr>db1 or div>div_thr, it is determined that an environment of receiving radio waves is bad. Therefore, determination whether pdop<pdop_thr is satisfied is not performed, and the process is placed in a ready state.

As described above, in reset of the elevation angle, the signal strengths of satellites and the arrangement state of the satellites are checked, and the elevation angle is controlled (reset) when a communication state is good. Therefore, it is possible to set upper and lower limits of the elevation angle with higher accuracy. Accordingly, a positioning signal with higher accuracy can be obtained by controlling the upper and lower limits of the elevation angle.

Meanwhile, when db_thr≥db (No at Step S34), this result means that the reception strength is weak, and the reception sensitivity is poor. The traveling-state determination processing portion 24 transitions to the reception strength control and a branch process A of autonomous measurement processing.

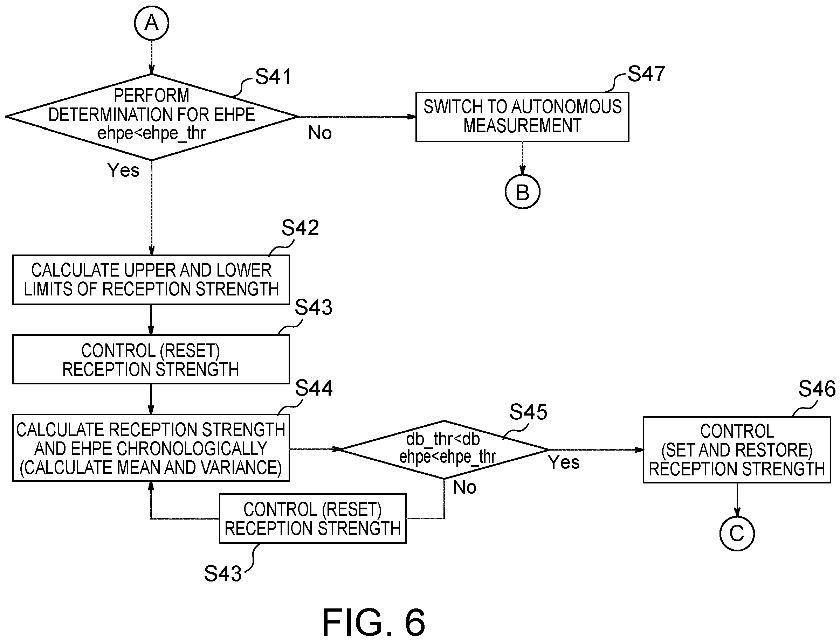

FIG. 6 is a flowchart of the branch process A. As illustrated in FIG. 6, the traveling-state determination processing portion 24 determines whether an EHPE value (ehpe) obtained by positioning is less than a predetermined threshold ehpe_thr for EHPE determination stored in the storage device 27 in order to determine whether reception strength control is necessary (Step S41).

When ehpe<ehpe_thr (Yes at Step S38), this result means that, although the position dilution of precision is low and the accuracy is relatively good, the reception strength is bad. The traveling-state determination processing portion 24 thus causes the satellite reception controller 22 to calculate upper and lower limits of the reception strength (Step S42) and controls (resets) the reception strength (Step S43).

In this case, examples of calculation of the upper and lower limits of the reception strength include a method using parameters of a regression equation obtained from a predetermined reception strength and an estimated position error stored in the storage device 27, and parameters of a regression equation obtained from the reception strength and the EHPE value. Any of these methods may be used because these methods are relational expressions that can improve the estimated position error.

Next, the processes at Steps S31 and S32 (FIG. 4) are performed in chronological order in a predetermined time range, whereby the reception strength and the EHPE value (ehpe) are acquired chronologically (Step S44). After a predetermined time has passed, it is determined whether db1_thr<db1, div<div_thr, and ehpe<ehpe_thr are satisfied (Step S45).

When db1_thr<db1, div<div_thr, and ehpe<ehpe_thr are established (Yes at Step S45), the reception strength is set to be restored, and the processes from Step S31 are repeated. This case means that the position dilution of precision of the satellite in the selected strength range is low and the accuracy is relatively good. Therefore, the control value is changed to the reset reception strength, and the processes from Step S31 are repeated. At this time, the traveling-state determination processing portion 24 stores information indicating the positioning calculation state (State1) in the storage device 27 together with the time. Further, in a case where the position dilution of precision of the satellite in the selected strength range is low and the accuracy is relatively good, it is possible to preferentially use position coordinates calculated by the vehicle-position correction portion 25 and the speed calculated by the autonomous-measurement operation processing portion 23 as position information of the railroad vehicle 11.

Meanwhile, when db1_thr<db1 and div<div_thr but the number of data pieces for which ehpe<ehpe_thr is satisfied does not exceed a predetermined value (No at Step S45), this result means that the quality of a reception signal of a satellite in the selected elevation-angle range is low. Therefore, the reception strength is controlled (reset) (Step S43), and the processes from Step S44 are repeated. When db1_thr>db1 or div>div_thr, this means that an environment of receiving radio waves is bad. Therefore, determination whether ehpe<ehpe_thr is satisfied is not performed, and the process is placed in a ready state.

As described above, in reset of the reception strength, the signal strengths of satellites and a position dilution of precision of a satellite in a selected strength range are checked while the attempt of check is repeated for a predetermined period of time. Therefore, it is possible to set upper and lower limits of the signal strength with higher accuracy. Accordingly, a positioning signal with higher accuracy can be obtained by controlling upper and lower limits of the signal strength.

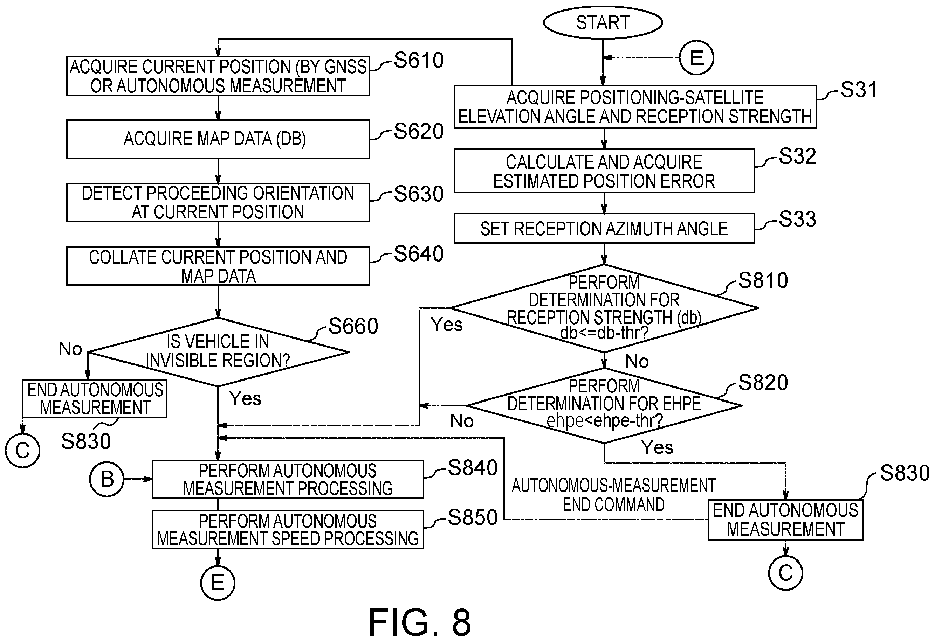

When db≤db-thr in the determination at Step S34 (see FIG. 5) and ehpe-thr≤ehpe in the determination at Step S41 (see FIG. 6), it is considered that the estimated position error is not improved even by execution of both reception strength control and elevation angle control. That is, it is considered that the positioning accuracy is not improved in this situation. Therefore, the positioning method is switched to autonomous measurement (Step S47), and the process is caused to transition to autonomous measurement processing (Step S84) (see FIG. 8). At this time, the traveling-state determination processing portion 24 stores information indicating the autonomous measurement processing state (State2) in the storage device 27 together with the time. Since it is considered that the estimated position error is not improved even by execution of both reception strength control and elevation angle control in this situation, it is possible to preferentially use the position coordinates calculated by the vehicle-position correction portion 25 and the speed calculated by the autonomous-measurement operation processing portion 23 as position information of the railroad vehicle 11.

Meanwhile, when pdop<pdop_thr (Yes at Step S35) in the determination at Step S35 (FIG. 4), the reception strength is sufficiently strong, and the estimated position error is small. Therefore, it is unnecessary to control a satellite elevation angle at this time, and the process transitions to a branch process D.

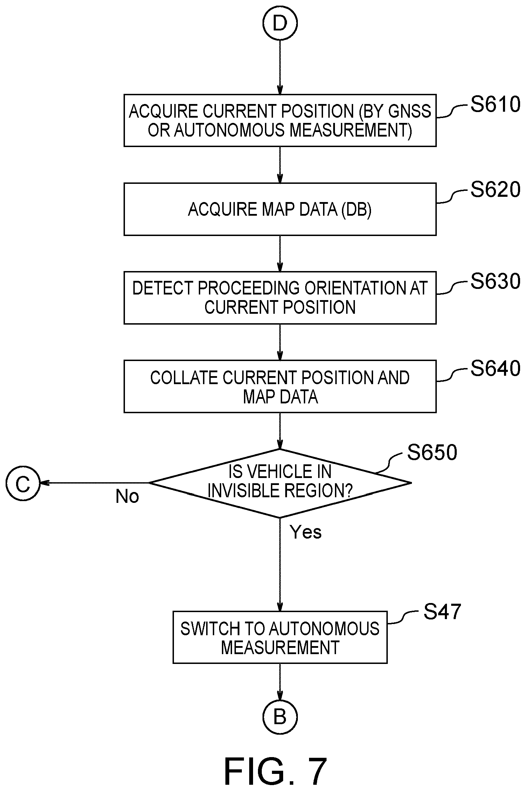

FIG. 7 is a flowchart of the branch process D. A process example is described with reference to FIG. 4, which performs switching to autonomous measurement processing in an invisible region.

The railroad vehicle 11 performs positioning measurement of the railroad vehicle 11 in the positioning-signal operation processing portion 21 which uses the positioning radio wave signals SX1 to SX4 and positioning measurement of the railroad vehicle 11 in the autonomous-positioning operation processing portion (the second positioning portion) 23 based on an output signal of the three-axis sensor unit CSU in parallel (Step S610).

The autonomous-measurement-switching determination portion 26 sequentially acquires track information of the line L2 on a map acquired from the storage device 27 and information on the invisible region B1-B2 (Step S620), and acquires a proceeding orientation of the railroad vehicle 11 obtained in the autonomous-positioning operation processing portion (the second positioning portion) 23 (Step S630).

Next, the autonomous-measurement-switching determination portion 26 collates a current position of the railroad vehicle 11 on a track of the line L2 based on the proceeding orientation of the railroad vehicle 11 and the positioning measurement of the railroad vehicle 11 acquired at Step S610 (Step S640). Subsequently, the autonomous-measurement-switching determination portion 26 determines whether the current position of the railroad vehicle 11 corresponds to a start point B1 or B2 of the invisible region B1-B2 (Step S650). For example, when the railroad vehicle 11 is an inbound train, the point B1 is the start point of the invisible region B1-B2. When the railroad vehicle 11 is an outbound train, the point B2 is the start point of the invisible region B1-B2. Meanwhile, when the railroad vehicle 11 is an inbound train, the point B2 is the end point of the invisible region B1-B2. When the railroad vehicle 11 is an outbound train, the point B1 is the end point of the invisible region B1-B2.

When determining that the railroad vehicle 11 enters into the invisible region B1-B2 (Yes at Step S650), the autonomous-measurement-switching determination portion 26 performs switching to autonomous measurement even in a case where the reception strength is sufficiently strong and the estimated position error is small (Step S47), and the process transitions to autonomous measurement processing (Step S84) (FIG. 8). Consequently, it is possible to transition to autonomous measurement processing more accurately before deterioration of radio waves. At this time, the traveling-state determination processing portion 24 stores information indicating the autonomous measurement processing state (State2) in the storage device 27 together with the time. It is possible to preferentially use the position coordinates calculated by the vehicle-position correction portion 25 and the speed calculated by the autonomous-measurement operation processing portion 23 as position information of the railroad vehicle 11.

For example, when decrease in the reception strength of radio waves is detected and switching is performed as in a conventional technique, a position where that decrease occurs may be a position after entrance to the invisible region B1-B2, so that switching may be delayed. Meanwhile, in a case of determining whether the current position of the railroad vehicle 11 corresponds to the start point B1 or B2 of the invisible region B1-B2, it is also possible to calculate a time point at which the railroad vehicle 11 reaches the start point B1 or B2 of the invisible region B1-B2 also using information on the speed of the railroad vehicle 11 and to transition to autonomous measurement processing according to the time point at which the railroad vehicle 11 reaches the start point B1 or B2. Accordingly, delay of transition to autonomous measurement processing is prevented. For example, while the railroad vehicle 11 travels at high speed, for example, at a speed of 200 km/h in an inbound direction, transition to autonomous measurement processing can be started before the railroad vehicle 11 reaches the start point B1, whereby a switching point P1 is matched to the start point B1. Thus, even in a case where switching is delayed in a conventional technique, position measurement can be performed continuously in a more stable manner. Further, the position of the start point B1 or B2 may be set before the invisible region B1-B2 in accordance with a regulation speed of the railroad vehicle 11. In this case, transition to autonomous measurement processing can be performed without using the speed information.

Meanwhile, when it is determined that the railroad vehicle 11 does not enter the invisible region B1-B2 (No at Step S65), the process transitions to a branch process C, and the processes from Step S31 (FIG. 4) are repeated. In this case, measurement is continued which mainly uses information on position measurement of the railroad vehicle 11 in the positioning-signal operation processing portion 21 using the positioning radio wave signals SX1 to SX4. As described above, it is possible to mainly use information on position measurement in the positioning-signal operation processing portion 21 when the accuracy of position measurement in the positioning-signal operation processing portion 21 is high, and to mainly use information on position measurement in the positioning-signal operation processing portion 21 in a region where the accuracy of position measurement in the autonomous-positioning operation processing portion (the second positioning portion) 23 is higher than the accuracy of position measurement in the positioning-signal operation processing portion 21.

FIG. 8 is a flowchart of processing of satellite reception control and processing of determining autonomous-measurement switching (part 2). As described above, in the situation where the positioning accuracy is not improved, the positioning method is switched to autonomous measurement (Step S46), so that the process transitions to autonomous measurement processing (Step S840). In this case, during transition to autonomous measurement processing, it is considered that the positioning accuracy is poor although a positioning signal of a satellite or the like is also received in parallel. However, it is necessary to perform switching to satellite positioning as soon as the situation is changed to improve the positioning accuracy, for example, after the railroad vehicle 11 exits a tunnel.

Therefore, as illustrated in FIG. 8, the positioning-satellite elevation angle and the reception strength are acquired using the acquired positioning signal, and the estimated position error is calculated and acquired (Steps S31 and S32) in parallel to autonomous positioning. The reception azimuth angle is then set based on the orientation of the proceeding direction of the railroad vehicle 11 which corresponds to the acquired positioning signal (Step S33).

Next, the autonomous-measurement-switching determination portion 26 determines whether the reception strength db obtained by positioning is less than the predetermined determination threshold db_thr for reception strength, using the determination threshold db_thr stored in the storage device 27 (Step S810). When db-thr<db (No at Step S810), this result means that the reception strength is sufficiently strong, the sensitivity is good, and the positioning accuracy is relatively good. Thus, in order to determine whether reception strength control is necessary, it is determined whether the EHPE value (ehpe) obtained by positioning is less than the predetermined threshold ehpe_thr for EHPE determination stored in the storage device 27 (Step S82).

When ehpe<ehpe_thr (Yes at Step S820), this result means that the position dilution of precision is low, and the accuracy is relatively good. Thus, the autonomous-measurement-switching determination portion 26 outputs an autonomous measurement end command to end autonomous measurement, thereby causing the process to transition to Step S31 (see FIG. 4), and starts satellite positioning with a position at which final calculation in autonomous measurement processing has been performed regarded as a first point of the satellite positioning (Step S830). At this time, the traveling-state determination processing portion 24 stores information indicating the autonomous measurement processing state (State2) in the storage device 27 together with the time. Since it is considered that the estimated position error is not improved even by execution of both reception strength control and elevation angle control in this situation, it is possible to preferentially use the position coordinates calculated by the vehicle-position correction portion 25 and the speed calculated by the autonomous-measurement operation processing portion 23 as position information of the railroad vehicle 11.

Meanwhile, when ehpe≥ehpe_thr (Yes at Step S810), this result means that the position dilution of precision is high, and the accuracy is relatively poor. Thus, the autonomous measurement processing is continued (Step S840), and the speed calculated by the autonomous-measurement operation processing portion 23 is used (Step S840).

Similarly, also in a case where it is determined that db_thr≥db is satisfied (No at Step S820), the reception strength is weak, the sensitivity is poor, and the positioning accuracy is relatively low. Therefore, the autonomous measurement processing is continued (Step S840), and the speed calculated by the autonomous-measurement operation processing portion 23 is used (Step S840).

Processes at Steps S610 to S660 are also performed in parallel to the processes at Steps 31 to S83. That is, the railroad vehicle 11 performs position measurement of the railroad vehicle 11 in the positioning-signal operation processing portion 21 which uses the positioning radio wave signals SX1 to SX4 and position measurement of the railroad vehicle 11 in the vehicle-position correction portion 25 based on an output signal of the three-axis sensor unit CSU in parallel (Step S610). Since the railroad vehicle 11 is in the invisible region B1-B2, position information by the vehicle-position correction portion 25 is mainly used.

The autonomous-measurement-switching determination portion 26 sequentially acquires track information on the line L2 on a map acquired from the storage device 27 and information on the invisible region B1-B2 (Step S620), and acquires a proceeding orientation of the railroad vehicle 11 obtained in the autonomous-measurement operation processing portion 23 (Step S630).

Next, the autonomous-measurement-switching determination portion 26 collates a current position of the railroad vehicle 11 on a track of the line L2 based on the proceeding orientation of the railroad vehicle 11 and the position measurement of the railroad vehicle 11 acquired at Step S610 (Step S640). Subsequently, the autonomous-measurement-switching determination portion 26 determines whether the current position of the railroad vehicle 11 corresponds to the end point B1 or B2 of the invisible region B1-B2 (Step S660). For example, when the railroad vehicle 11 is an inbound train, the point B2 is the end point of the invisible region B1-B2. When the railroad vehicle 11 is an outbound train, the point B1 is the end point of the invisible region B1-B2.

When determining that the railroad vehicle 11 exits from the invisible region B1-B2 (No at Step S650), the autonomous-measurement-switching determination portion 26 outputs the autonomous measurement end command in order to end autonomous measurement, thereby making the process transition to Step S31 (see FIG. 4), and starts satellite positioning with a position at which final calculation in autonomous measurement processing has been performed regarded as a first point of the satellite positioning (Step S830). Consequently, the process can transition to the satellite positioning more accurately at a timing at which radio disturbance is eliminated.

When radio disturbance is evaluated and switching is performed, the position at which the radio disturbance is eliminated may be immediately after the invisible region B1-B2, and switching may be delayed. Meanwhile, in a case of determining whether the current position of the railroad vehicle 11 corresponds to the end point B1 or B2 of the invisible region B1-B2, it is possible to calculate a time at which the railroad vehicle 11 reaches the end point B1 or B2 of the invisible region B1-B2 also using, for example, information on the speed of the railroad vehicle 11. Accordingly, the process can transition to the satellite positioning in accordance to the time point at which the railroad vehicle 11 reaches the end point B2. As described above, delay of transition to the satellite positioning is prevented. For example, while the railroad vehicle 11 travels at high speed, for example, at a speed of 200 km/h in an inbound direction, transition to the satellite positioning can be started before the railroad vehicle 11 reaches the end point B2, whereby a switching point P2 is matched to the end point B2. Thus, also in a case where switching is delayed by a conventional technique, position measurement can be performed continuously in a more stable manner. Further, the position of the end point B1 or B2 may be installed before the invisible region B1-B2 in accordance with a regulation speed of the railroad vehicle 11. In this case, transition to the satellite positioning processing can be made without using the speed information.

In addition, since the processes at Steps 31 to S830 are performed in parallel, the autonomous measurement is maintained when the states of the positioning radio wave signals SX1 to SX4 are bad. Therefore, transition to the satellite positioning processing can be prevented also when the states of the positioning radio wave signals SX1 to SX4 are bad.

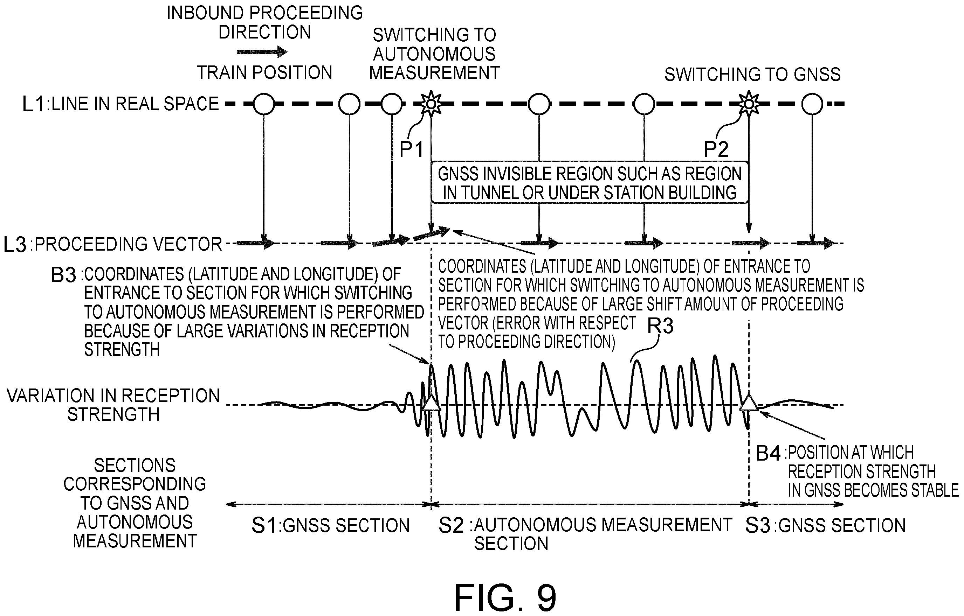

Next, another example of the branch process D is described with reference to FIG. 9. A process example is described with reference to FIG. 9, which performs switching to autonomous measurement processing in the invisible region B1-B2 based on information of the positioning radio wave signals SX1 to SX4.

FIG. 9 is a diagram schematically illustrating a processing environment in a case of detecting the invisible region B1-B2 based on the positioning radio wave signals SX1 to SX4. The railroad vehicle 11 travels on a track of the line L1 in a real space. The positioning-signal operation processing portion 21 calculates an orbit L3 of a proceeding vector of the railroad vehicle 11 using a positioning radio wave signal R3. The positioning radio wave signal R3 schematically represents the positioning radio wave signals SX1 to SX4.

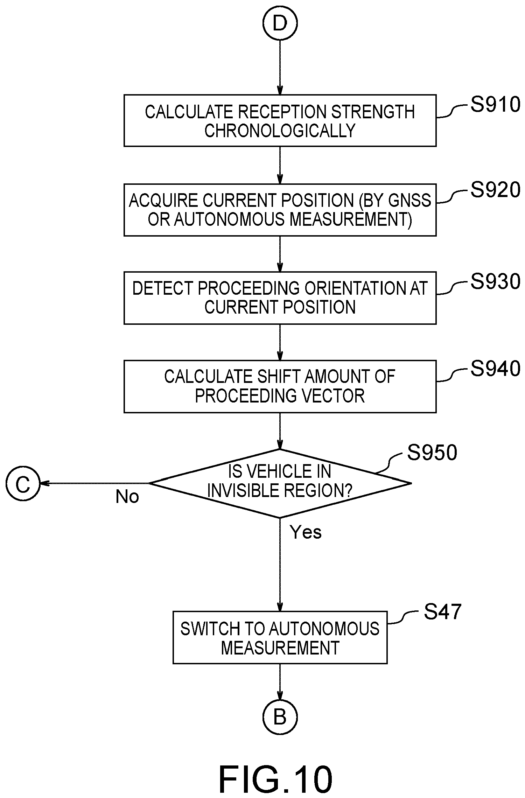

FIG. 10 is a flowchart of another branch process D. Here, a process example is described with reference to FIG. 9, which performs switching to autonomous measurement processing in an invisible region.

The autonomous-measurement-switching determination portion 26 calculates the mean value db1 and the variance value dv1 that are time-series values obtained by measuring the positioning radio wave signal R3 for a predetermined period of time (Step S910). As described above, the mean value db1 decreases in the invisible region B1-B2, whereas the variance value dv1 increases in a region including the invisible region B1-B2 and regions before and after it.

The railroad vehicle 11 performs position measurement of the railroad vehicle 11 in the positioning-signal operation processing portion 21 which uses the positioning radio wave signals SX1 to SX4 and position measurement of the railroad vehicle 11 in the vehicle-position correction portion 25 based on an output signal of the three-axis sensor unit CSU in parallel (Step S920). Subsequently, the positioning-signal operation processing portion 21 calculates a proceeding direction of the railroad vehicle 11 as a proceeding vector L3 based on the positioning radio wave signals SX1 to SX4 (Step S930).

Next, the positioning-signal operation processing portion 21 calculates an amount of change r1 of the proceeding vector L3 per unit time (Step S940).

The autonomous-measurement-switching determination portion 26 determines that the current position is the start point B1 of the invisible region B1-B2, for example, when $r1 > r1\_thr$ (Step S950). The proceeding vector L3 is high in sensitivity to disturbance of the strengths of the positioning radio wave signals SX1 to SX4, and the amount of change r1 greatly changes around the start point B1 of the invisible region B1-B2. This change thus enables determination that the railroad vehicle 11 approaches the start point B1. In this case, determination whether the current position of the railroad vehicle 11 corresponds to the start point B1 or B2 of the invisible region B1-B2 may be made also using the variance value dv1 and the mean value db1 of the positioning radio wave signal R3. That is, the determination conditions may include $db1 \leq db1\_thr$ and $dv1 > dv1\_thr$. Accordingly, when the strength disturbance of the positioning radio wave signals SX1 to SX4 is small, it is possible to further reduce erroneous determination that the current position of the railroad vehicle 11 is the start point B1 of the invisible region B1-B2. As described above, the start point B1 of the invisible region B1-B2 can be determined without using track information of the line L1. Even in a case where there is no map data or there is a building or the like that is not included in map information, determination of the invisible region B1-B2 is possible.

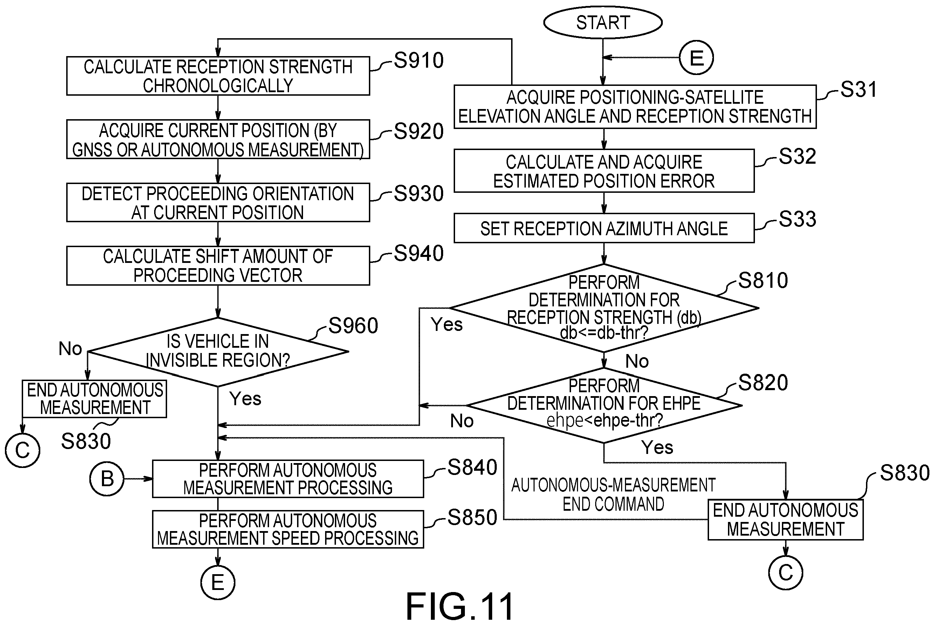

When determining that the railroad vehicle 11 enters into the invisible region B1-B2 (Yes at Step S950), the autonomous-measurement-switching determination portion 26 performs switching to autonomous measurement (Step S47), thereby making the process transition to autonomous measurement processing (Step S84) (FIG. 11).

Meanwhile, when it is determined that the railroad vehicle 11 does not enter the invisible region B1-B2 (No at Step S950), the process transitions to a branch process C, and the processes from Step S31 (FIG. 4) are repeated. In this case, measurement is continued mainly using information on position measurement of the railroad vehicle 11 in the positioning-signal operation processing portion 21 which uses the positioning radio wave signals SX1 to SX4. As described above, it is possible to mainly use information on position measurement in the positioning-signal operation processing portion 21 when the accuracy of position measurement in the positioning-signal operation processing portion 21 is high, and to mainly use information on position measurement in the vehicle-position correction portion 25 in a region where the accuracy of position measurement in the vehicle-position correction portion 25 is higher than the accuracy of position measurement in the positioning-signal operation processing portion 21.

FIG. 11 is a flowchart in a case of using the process illustrated in FIG. 10. FIG. 11 is different from FIG. 8 in using the method described in FIG. 10 for determination of an invisible region. In the following descriptions, differences from FIG. 8 are explained.

The autonomous-measurement-switching determination portion 26 determines that the current position of the railroad vehicle 11 is the end point B2 of the invisible region B1-B2, for example, when r1<r1_thr (Step S960). The proceeding vector L3 is high in sensitivity to the strength disturbance of the positioning radio wave signals SX1 to SX4, and the strength disturbance decreases around the end point B2 of the invisible region B1-B2. Therefore, the amount of change r1 becomes small. This change enables determination that the railroad vehicle 11 approaches the end point B2. In this case, determination whether the current position of the railroad vehicle 11 corresponds to the start point B1 or B2 of the invisible region B1-B2 may be made also using the variance value dv1 and the mean value db1 of the positioning radio wave signal R3. That is, the determination conditions may include db1≥db1_thr and dv1<dv1_thr. Accordingly, when the strength disturbance of the positioning radio wave signals SX1 to SX4 is large, it is possible to further reduce erroneous determination that the current position of the railroad vehicle 11 is the end point B2 of the invisible region B1-B2. As described above, under a situation where the positioning accuracy is not improved, the positioning method is switched to autonomous measurement (Step S46), whereby the process transitions to autonomous measurement processing (Step S840). In this case, during transition to autonomous measurement processing, it is considered that the positioning accuracy is poor although a positioning signal of a satellite or the like is also received in parallel. However, it is necessary to perform switching to satellite positioning as soon as the situation is changed to improve the positioning accuracy, for example, after the railroad vehicle 11 exits a tunnel.

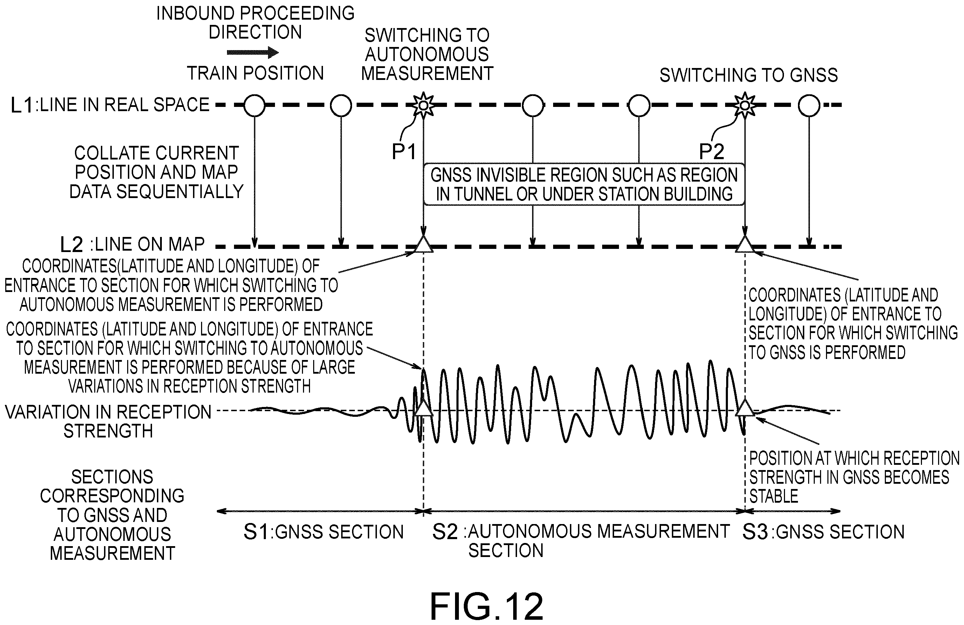

Next, a process example is described with reference to FIG. 12, which performs switching to autonomous measurement processing based on map data and information of the positioning radio wave signals SX1 to SX4.

FIG. 12 is a diagram schematically illustrating a processing environment in a case of switching to the invisible region B1-B based on map data and information of the positioning radio wave signals SX1 to SX4. The railroad vehicle 11 travels on a track of the line L1 in a real space. The positioning-signal operation processing portion 21 calculates the orbit L3 of a proceeding vector of the railroad vehicle 11 using the positioning radio wave signal R3. The positioning radio wave signal R3 schematically represents the positioning radio wave signals SX1 to SX4.

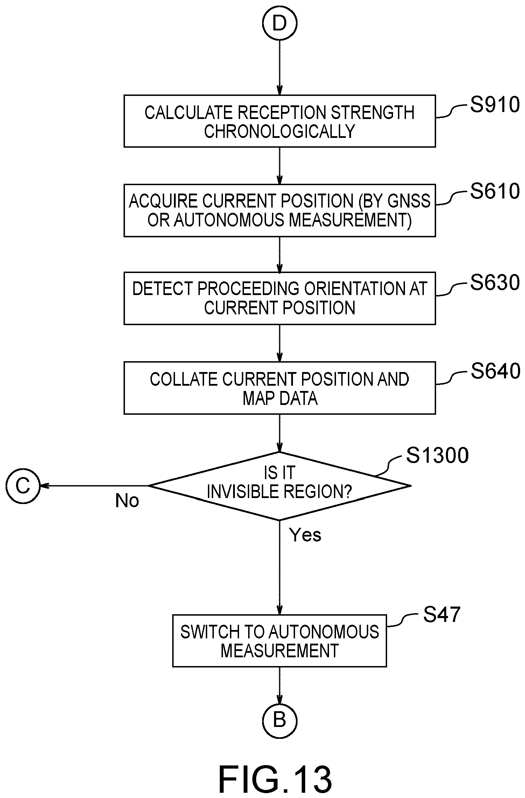

FIG. 13 is a flowchart of a still another branch process D. A process example is described with reference to FIG. 12, which performs switching to autonomous measurement processing in an invisible region. FIG. 13 is a flowchart corresponding to FIG. 8. In the following descriptions, differences in processes from FIG. 8 are explained.

The autonomous-measurement-switching determination portion 26 determines whether the current position of the railroad vehicle 11 corresponds to the start point B1 or B2 of the invisible region B1-B2, also using the variance value dv1 and the mean value db1 of the positioning radio wave signal R3 (Step S1300). For example, it is determined whether the current position of the railroad vehicle 11 corresponds to the start point B1 or B2 of the invisible region B1-B2, also using the variance value dv1 and the mean value db1 of the positioning radio wave signal R3. For example, the autonomous-measurement-switching determination portion 26 determines that the current position is in the invisible region B1-B2 when determination conditions db1≥db1_thr and dv1<dv1_thr are satisfied or when the railroad vehicle 11 reaches a predetermined position.

Accordingly, even when an unexpected invisible region not stored in the storage device 27 is generated due to a moving object, a building under construction, or the like, it is possible to determine that the railroad vehicle 11 is within the invisible region.

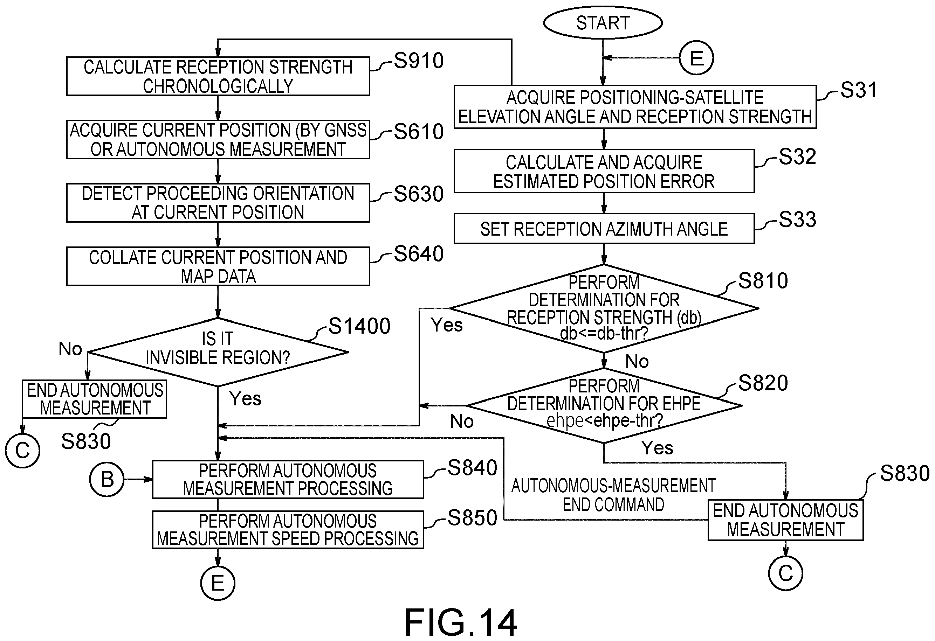

FIG. 14 is a flowchart in a case of using the process illustrated in FIG. 13. FIG. 14 is different from FIG. 8 in using the method described in FIG. 13 for determination of an invisible region. In the following descriptions, differences from FIG. 8 are explained.

The autonomous-measurement-switching determination portion 26 determines whether the current position of the railroad vehicle 11 corresponds to the end point B1 or B2 of the invisible region B1-B2, also using the variance value dv1 and the mean value db1 of the positioning radio wave signal R3 (Step S1400). For example, the autonomous-measurement-switching determination portion 26 determines that the current position is the end point B1 or B2 of the invisible region B1-B2 when determination conditions db1≥db1_thr and dv1<dv1_thr or satisfied or when the railroad vehicle 11 reaches a predetermined position. Accordingly, also when another invisible region, for example, is generated due to a building not stored in the storage device 27, a building under construction, or the like, it is possible to determine that the railroad vehicle 11 has exit the invisible region.

Next, details of satellite reception control are described.

FIG. 15 is a flowchart of processing of reception satellite control in the satellite reception controller 22. The satellite reception controller 22 performs a function of selecting an artificial satellite used for position detection in accordance with a positioning environment.

In a case where the antenna 13 that receives a positioning signal (hereinafter, simply referred to as the antenna 13 in some cases) is inside the railroad vehicle 11, a positioning signal particularly from a satellite facing to direction opposite to a proceeding direction, a satellite present in a side direction, or the like is highly likely to be reflected or diffracted and received, and measurement accuracy is thus immediately affected. Therefore, the satellite reception controller 22 performs processing of reception satellite control in order to maintain the measurement accuracy.

First, the satellite reception controller 22 acquires a positioning-satellite elevation angle and a reception strength using an acquired positioning signal, as illustrated in FIG. 15 (Step S61).

Next, the satellite reception controller 22 acquires satellite almanac information and satellite ephemeris information from an artificial satellite from which reception is available, to acquire information on orbits of the artificial satellites 12-1 to 12-4 (Step S62).

FIGS. 16 are explanatory diagrams of a reception state of positioning information. FIG. 16A is a diagram illustrating the outline of satellite orbit information. In FIG. 16A, the antenna 13 of the railroad vehicle 11 is arranged at the center of a circle. In FIG. 16A, a white circle represents a current position of an artificial satellite, and a curve passing through the current position of the artificial satellite represents satellite orbit information of that artificial satellite.

In the situation as illustrated in FIG. 16A, a range that can be actually received by the antenna 13 of the railroad vehicle 11 differs depending on an arranged position of the antenna 13 and a traveling position of the railroad vehicle 11. For example, as illustrated in FIG. 16B, the satellite reception controller 22 sets a reception-effective area AE and a reception-ineffective area AN. A reception azimuth angle is set based on the proceeding direction DR of the railroad vehicle 11 so as to be, for example, 135 degrees in each of the clockwise direction and the counterclockwise direction with respect to the proceeding direction DR.

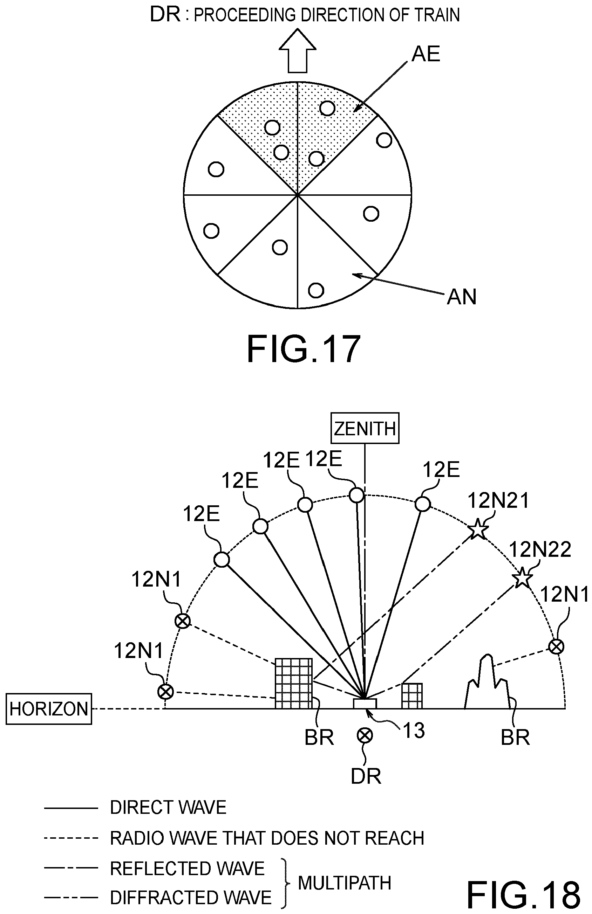

FIG. 17 is a diagram illustrating a setting example of the reception-effective area AE and the reception-ineffective area AN in a case of speed measurement in the positioning-signal-speed calculation portion (the second measurement portion) 29. Speed measurement in the positioning-signal-speed calculation portion (the second measurement portion) 29 is performed by Doppler. Therefore, the reception-effective area AE is further limited in the proceeding direction DR. In this case, a reception azimuth angle is set to, for example, 45 degrees in each of the clockwise direction and the counterclockwise direction (Step S63).

Further, the satellite reception controller 22 continuously performs, for the reception-effective area AE corresponding to the set reception azimuth angle, a process of setting a satellite arrangement determination area AD for determining an artificial satellite arrangement position for selecting an artificial satellite after proceeding so as to have 90 degrees in each of the clockwise direction and the counter-clockwise direction with respect to the proceeding direction DR of the railroad vehicle 11, as illustrated in FIG. 16C, and specifying an artificial satellite to be selected next time (Step S64).

Here, the process of selecting an artificial satellite in the satellite reception controller 22 is described in detail. FIG. 18 is an explanatory diagram of a process of selecting an artificial satellite. As illustrated in FIG. 18, a proceeding direction of the railroad vehicle 11 is forward in a direction vertical to the sheet. The satellite reception controller 22 selects, among artificial satellites located in the reception-effective area AE, an artificial satellite belonging to set reception strengths (a range specified by a reception-strength upper limit and a reception-strength lower limit) as an effective artificial satellite 12E.

On the contrary, artificial satellites 12N1, 12N21, and 12N2 that do not belong to the set reception strength range are determined to be ineffective and are excluded from selection. More specifically, the artificial satellite selected as the effective artificial satellite 12E is an artificial satellite that is located in the reception-effective area AE and can directly receive a positioning signal via the antenna 13.

On the other hand, the ineffective artificial satellite 12N1 is an artificial satellite that cannot receive a positioning signal because the positioning signal does not reach due to an obstacle BR such as a building or a mountain.

The ineffective artificial satellite 12N21 is an artificial satellite in which because the positioning signal reaches the antenna 13 after being reflected by the obstacle BR such as a building or a mountain, a time delay occurs, the reception strength is reduced, and the positioning accuracy is reduced.

The ineffective artificial satellite 12N22 is an artificial satellite in which because the positioning signal reaches the antenna 13 after being diffracted by the obstacle BR such as a building or a mountain, a time delay occurs, the reception strength is reduced, and the positioning accuracy is reduced.

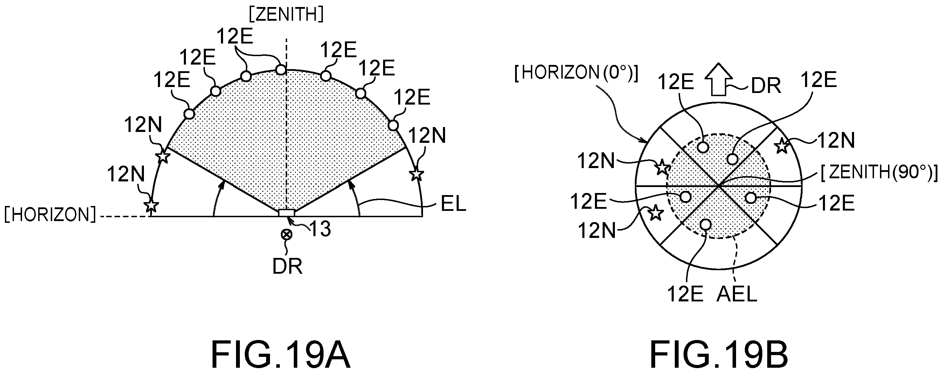

FIGS. 19 are explanatory diagrams of elevation angle control in the satellite reception controller 22.

The satellite reception controller 22 controls an elevation angle EL so as to include all the effective artificial satellites 12E, which have been selected by the above-described artificial satellite selection process, and so as not to include the ineffective artificial satellites 12N (=the artificial satellite 12N21 and the artificial satellite 12N22), as illustrated in FIG. 19A.

As a result, an effective elevation angle range AEL is obtained as illustrated in FIG. 19B. The satellite reception controller 22 thus specifies an artificial satellite located in the reception-effective area AE illustrated in FIGS. 16 and processes its corresponding positioning signal. As a result, the positioning accuracy can be maintained at a desired value or higher.

In this case, the satellite reception controller 22 regularly acquires a proceeding direction of the railroad vehicle 11 from a reception azimuth angle for a certain period of time (for example, one second), and acquires an averaged azimuth angle as a proceeding direction angle. A satellite existing in this proceeding direction angle may be selected based on satellite orbit information.

Further, when the azimuth angle of the proceeding direction changes greatly (for example, by 10°) due to a curve, a route change, or the like, the satellite reception controller 22 may acquire the proceeding direction angle at any time to select a population satellite based on the satellite orbit information.

As a result, it is possible to select only a positioning signal that can improve the accuracy of position detection more.

Next, functions of the autonomous-measurement operation processing portion 23 and the traveling-state determination processing portion 24 are described in detail.

The autonomous-measurement operation processing portion 23 has a function of performing an initial-value calculation process serving as calibration based on acceleration information, gyro information, and geomagnetic information output by the three-axis sensor unit CSU, a function of performing a correction calculation process on a cumulative error of a three-axis sensor value, and a function of performing a process of calculating speed information of the railroad vehicle 11 based on a value obtained by the correction calculation process and the three-axis sensor value. The traveling-state determination processing portion 24 has a function of selecting, based on speed information of the railroad vehicle 11 obtained from satellite reception information and the speed information calculated by the autonomous-measurement operation processing portion 23, traveling information of the railroad vehicle 11 estimated within an error acceptable range, and a function of determining whether the railroad vehicle 11 is stopped or traveling based on the speed information of the railroad vehicle 11.

FIG. 20 is a flowchart of processing of the autonomous-measurement operation processing portion 23 and the traveling-state determination processing portion 24.

First, the autonomous-measurement operation processing portion 23 acquires acceleration information, gyro information, and geomagnetic information output by the three-axis sensor unit CSU (Step S71).

Next, the autonomous-measurement operation processing portion 23 performs an initial-value calculation process based on the acceleration information, the gyro information, and the geomagnetic information that have been acquired (Step S72). It is preferable that this initial-value calculation process is basically performed while the railroad vehicle 11 is stopped. The reason why this process is performed while the railroad vehicle 11 is stopped is that, if the initial-value calculation process is performed while the railroad vehicle 11 is moving, this process affects a measured value and also makes initialization of a cumulative error difficult.

The following description will be provided assuming that the initial-value calculation process is performed while the railroad vehicle 11 is stopped in order to enable a more accurate measured value to be obtained and enable initialization of the cumulative error to be performed. The initial-value calculation process is to accumulate and average each of values of the acceleration information, the gyro information, and the geomagnetic information output by the three-axis sensor unit CSU while the railroad vehicle 11 is stopped, and to acquire the accumulated and averaged values thus obtained as offset values of respective three-axis sensors.

The function of performing a correction calculation process on a cumulative error for the value of each of the acceleration information, the gyro information, and the geomagnetic information output by the three-axis sensor unit CSU applies the above-described offset value to each of the values of the three-axis sensors, thereby being able to offset an error that is accumulated.

Further, not only before the railroad vehicle 11 starts traveling, but also when the railroad vehicle 11 stops at a station or the like, when the stopped state continues after a predetermined set time elapses, the offset amount is acquired again by performing an identical initial-value calculation process, and the cumulative error is offset as needed. The initial-value calculation process can thus reduce the cumulative error.

A cumulative error esn of each three-axis sensor value output by the three-axis sensor unit CSU is monitored (Step S73), and a corrected three-axis sensor value is calculated by correcting the output value of the three-axis sensor value (Step S74).

Next, the autonomous-measurement operation processing portion 23 calculates a speed of the railroad vehicle 11 from the corrected three-axis sensor values thus obtained(Step S75). In calculation of the speed of the railroad vehicle 11, an acceleration value as an output of a three-axis acceleration sensor, output by the three-axis sensor unit CSU, is integrated at a time interval at which that value is acquired, thereby being calculated as speed information of the railroad vehicle 11. Each piece of information is output as the autonomous positioning data DS chronologically.

Meanwhile, the traveling-state determination processing portion 24 acquires speed information of the railroad vehicle 11 obtained from satellite reception information (Step S76).

Next, the traveling-state determination processing portion 24 compares a cumulative error allowable value esn_thr of the three-axis sensor and the cumulative error esn obtained by monitoring with each other, and determines whether the cumulative error esn is less than the cumulative error allowable value esn_thr (Step S77).

More specifically, it is determined whether the railroad vehicle 11 has not continuously travelled for a predetermined time or more since the last stop of the railroad vehicle 11 and the cumulative error of the three-axis sensor is considered to be within an allowable range.

When the cumulative error esn is less than the cumulative error allowable value esn_thr, that is, esn<esn_thr in the determination at Step S77 (Yes at Step S77), the traveling-state determination processing portion 24 selects speed information spd of the railroad vehicle 11 corresponding to the output of the three-axis acceleration sensor output from the three-axis sensor unit CSU (Step S78) because reliability of the speed information of the railroad vehicle 11 corresponding to the output of the three-axis acceleration sensor is high, and determines whether "the speed information spd of the railroad vehicle 11 < a predetermined speed determination value spd_th for the railroad vehicle 11" is satisfied based on the speed information spd of the railroad vehicle 11 corresponding to that output of the three-axis acceleration sensor and the speed determination value spd_thr for the railroad vehicle 11 stored in the storage device 27 (Step S80). When spd<spd_thr, the railroad vehicle 11 is in a stopped state. When spd≥spd_thr, the railroad vehicle 11 is in a traveling state.

When it is determined that spd<spd_thr in the determination at Step S80 (Yes at Step S80), the railroad vehicle 11 is in a stopped state. Therefore, the traveling-state determination processing portion 24 outputs information indicating that the railroad vehicle 11 is stopped and the speed information of the railroad vehicle 11 corresponding to the output of the three-axis acceleration sensor output by the three-axis sensor unit CSU, and ends the process (Step S81).

When it is determined that spd≥spd_thr in the determination at Step S80 (No at Step S80), the railroad vehicle 11 is in a traveling state. Therefore, the traveling-state determination processing portion 24 outputs information indicating that the railroad vehicle 11 is traveling and the speed information of the railroad vehicle 11 corresponding to the output of the three-axis acceleration sensor output by the three-axis sensor unit CSU, and ends the process (Step S82).

Meanwhile, when the cumulative error esn is equal to or larger than the cumulative error allowable value esn_thr, that is, esn≥esn_thr in the determination at Step S77 (No at Step S77), a current situation is considered to be a situation in which the railroad vehicle 11 is in a continuous traveling state, the reliability of the speed information of the railroad vehicle 11 corresponding to the output of the three-axis acceleration sensor output by the three-axis sensor unit CSU is low, and the reliability of speed information of the railroad vehicle 11 corresponding to satellite information is high if the state stored in the storage device 27 is Stat1. Therefore, the speed information spd of the railroad vehicle 11 corresponding to the satellite information is selected (Step S79). When the state is Stat2, the process waits for change of the state to Stat1. Further, the traveling-state determination processing portion 24 can preferentially use a speed calculated by the positioning-signal-speed calculation portion 29 if the state stored in the storage device 27 is Stat1.

Based on the speed information spd of the railroad vehicle 11 corresponding to reception data from an artificial satellite and the predetermined speed determination value spd-thr for the railroad vehicle 11 stored in the storage device 27, it is determined whether "the speed information spd of the railroad vehicle 11 < the speed determination value spd_th for the railroad vehicle 11" is satisfied (Step S80). It is determined that the railroad vehicle 11 is in a stopped state when spd<spd_thr, and is in a travelling state when spd≥spd_thr.

When it is determined that spd<spd_thr in the determination at Step S80 (Yes at Step S80), the railroad vehicle 11 is in a stopped state. Therefore, information indicating that the railroad vehicle 11 is stopped and the speed information of the railroad vehicle 11 corresponding to the reception data from the artificial satellite are output, and the process is ended (Step S81).

When it is determined that spd≥spd-thr in the determination at Step S80 (No at Step S40), the railroad vehicle 11 is in a traveling state. Therefore, information indicating that the railroad vehicle 11 is traveling and the speed information of the railroad vehicle 11 corresponding to the reception data from the artificial satellite are output, and the process is ended (Step S82).

FIG. 21 is a flowchart of processing of the vehicle-position correction portion 25.

The vehicle-position correction portion 25 acquires an estimated position error (EHPE and PDOP) pos calculated in the satellite reception controller 22 (Step S91).

Subsequently, the vehicle-position correction portion 25 acquires a predetermined position-error allowable value pos-thr stored in the storage device 27, compares the acquired estimated position error pos and the acquired position-error allowable value pos_thr with each other, and determines whether "the estimated position error pos < the position-error allowable value pos_thr" is satisfied, that is, whether the position detection accuracy is relatively good (Step S92).

In the determination at Step S92, when "the estimated position error pos < the position-error allowable value pos_thr" is satisfied (Yes at Step S92), it is considered that the position detection accuracy is relatively good. Therefore, stopping information or traveling information of the railroad vehicle 11 is acquired from the traveling-state determination processing portion 24 (Step S93).

Next, the vehicle-position correction portion 25 determines whether the railroad vehicle 11 is in a stopped state or in a traveling state (Step S94).

In the determination at Step S94, when "the estimated position error pos < the position-error allowable value pos_thr" and the railroad vehicle 11 is in a stopped state (Yes at Step S94), the three-axis sensor value is initialized in the three-axis sensor unit CSU (Step S95), and the vehicle-position correction portion 25 makes the process transition to Step S91 again.

Meanwhile, in the determination at Step S94, when "the estimated position error pos ≥ the position-error allowable value pos_thr" is satisfied (No at Step S94), it is considered that the position detection accuracy is relatively poor, and thus speed information output by the traveling-state determination processing portion 24 is acquired (Step S96).

The autonomous-measurement operation processing portion 23 calculates a speed of the railroad vehicle 11 from the corrected three-axis sensor value thus obtained (Step S75). In calculation of the speed of the railroad vehicle 11, an acceleration value as an output of a three-axis acceleration sensor, output by the three-axis sensor unit CSU, is integrated at a time interval at which that value is acquired, thereby being calculated as speed information of the railroad vehicle 11. Each piece of information is output as the autonomous positioning data DS in chronological order.

Subsequently, the autonomous-measurement operation processing portion 23 calculates an azimuth angle (Step S97), and the vehicle-position correction portion 25 acquires the calculated value. Subsequently, the autonomous-measurement operation processing portion 23 calculates a travel vector in the three-axis direction (Step S98), and the vehicle-position correction portion 25 acquires the calculated value.

Next, the vehicle-position correction portion 25 acquires position information (position coordinates) including latitude information and longitude information when the state is Stat1 from the positioning-signal operation processing portion 21, and specifies a current position of the railroad vehicle 11 (Step S99). When the state is Stat2, the vehicle-position correction portion 25 waits to perform the process of specifying the current position until the state changes to Stat1.

The vehicle-position correction portion 25 then obtains the magnitude of the travel vector in the azimuth angle direction from the speed information in accordance with a time interval of positioning based on radio waves received from artificial satellites, and accumulates the obtained magnitude, thereby performing calculation of correcting the current position of the railroad vehicle 11 (Step S100).

As described above, according to the present first embodiment, a traveling position of the railroad vehicle 11 can be reliably acquired, switching to autonomous positioning with less delay can be performed even in a situation where satellite information cannot be obtained, for example, in a tunnel, and more accurate traveling position data can be provided. Further, the traveling position of the railroad vehicle 11 can be reliably acquired, switching to speed measurement by the autonomous positioning with less delay can be performed even in measurement of a speed of the railroad vehicle 11 in the situation where the satellite information cannot be obtained, for example, in a tunnel, and more accurate speed data can be provided.

(Second embodiment)

A second embodiment is different from the first embodiment in that a course of the railroad vehicle 11 is predicted, it is determined whether the railroad vehicle 11 is traveling in a straight section or a curved section, and the determination result is compared with traveling-section information for the railroad vehicle 11 stored in advance with each other, whereby information for causing the railroad vehicle 11 to travel appropriately is provided based on whether an actual traveling state of the railroad vehicle 11 is suitable for an actual traveling section. In the following descriptions, differences from the first embodiment are explained.

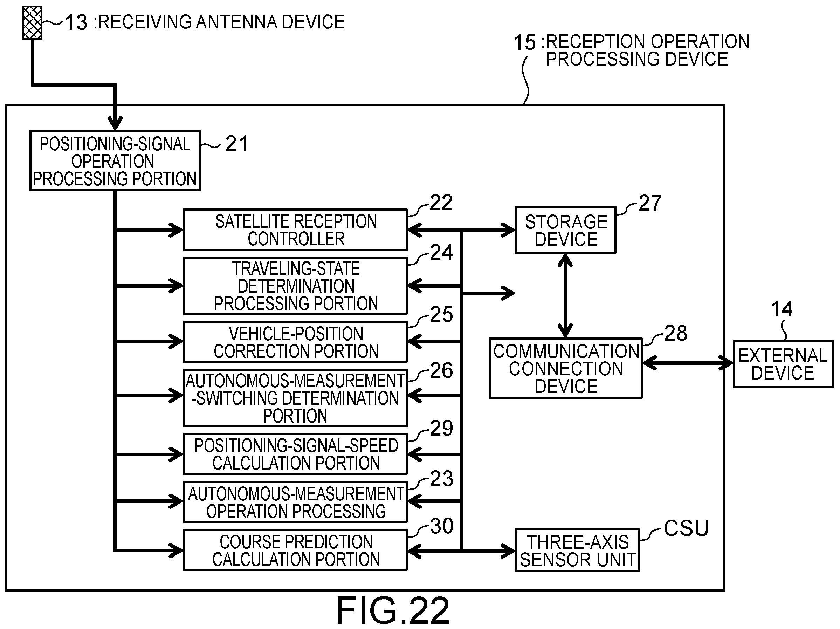

FIG. 22 is a block diagram of a functional configuration of a reception operation processing device according to the second embodiment. As illustrated in FIG. 22, this configuration is different from the configuration in the first embodiment in, in addition to the configuration in the first embodiment illustrated in FIG. 2, including a vehicle-course prediction calculation portion 30 that predicts an actual course (a traveling position in a predetermined traveling section) of the railroad vehicle 11.

Here, an operation of the vehicle-course prediction calculation portion 30 is described.

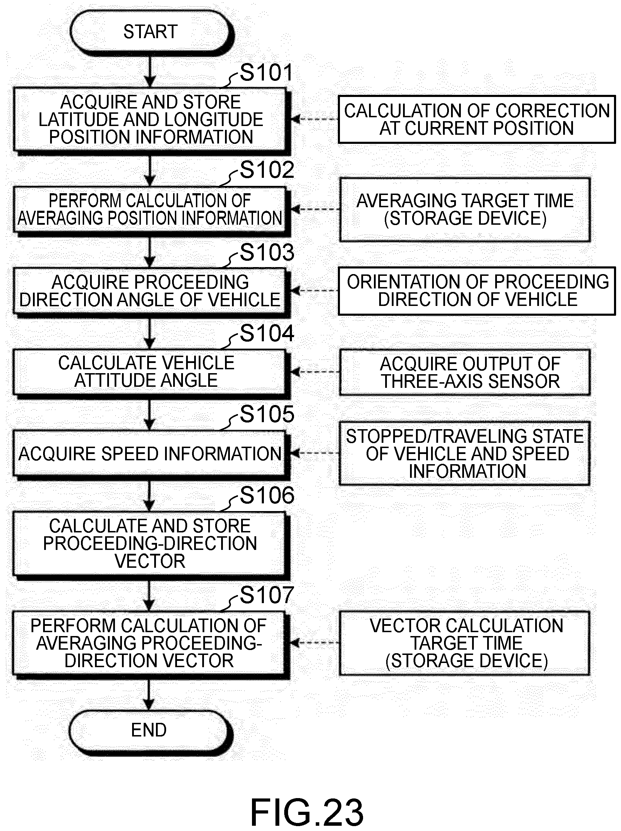

FIG. 23 is a flowchart of processing of a vehicle-course prediction calculation portion (part 1).

The vehicle-course prediction calculation portion 30 acquires position information (position coordinates) including latitude information and longitude information output by the positioning-signal operation processing portion 21 and stores that position information therein (Step S101).

Subsequently, the vehicle-course prediction calculation portion 30 performs averaging calculation on the position information based on an averaging target time stored in advance in the storage device 27, and calculates an average position of the railroad vehicle 11 for each averaging target time (Step S102). The vehicle-course prediction calculation portion 30 then acquires an angle of a proceeding direction of the railroad vehicle 11 (an orientation of the proceeding direction of the railroad vehicle 11) based on the averaged position information thus obtained (Step S103). Further, the vehicle-course prediction calculation portion 30 calculates an attitude angle (that is, a cant) of the railroad vehicle 11 based on acceleration information, gyro information, and geomagnetic information output by the three-axis sensor unit CSU (Step S104).

Next, the vehicle-course prediction calculation portion 30 acquires a stopped/traveling state and speed information of the railroad vehicle 11 output by the travelling-state determination processing portion 24 (Step S105). Subsequently, the vehicle-course prediction calculation portion 30 calculates a proceeding-direction vector of the railroad vehicle 11 and stores it (Step S106).

Further, the vehicle-course prediction calculation portion 30 performs a traveling-direction vector averaging calculation for obtaining a vector azimuth angle shp that is an average value of the stored proceeding-direction vectors of the railroad vehicle 11 for each predetermined vector calculation target time stored in advance in the storage device 27 (Step S107).

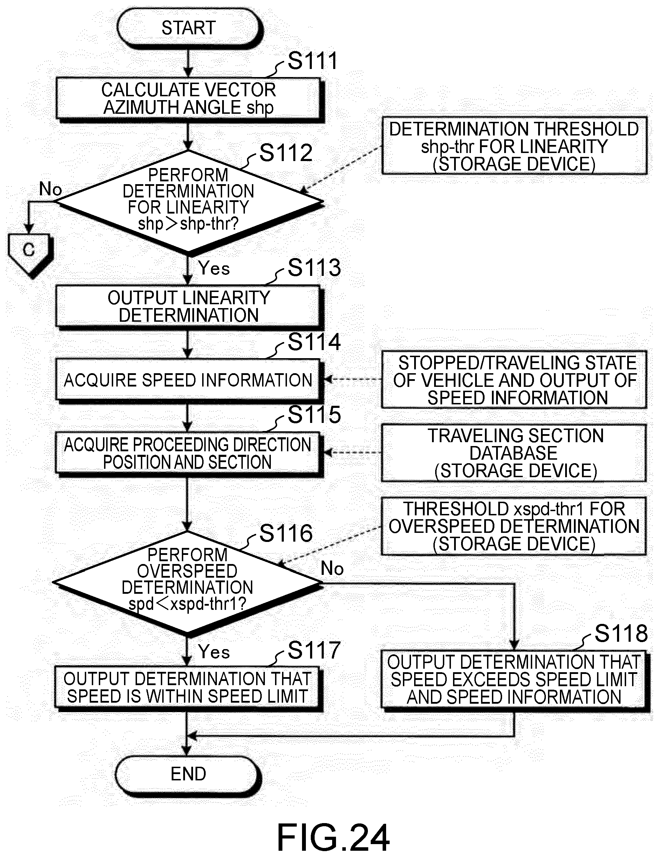

FIG. 24 is a flowchart of processing of a vehicle-course prediction calculation portion (part 2).

Subsequently, the vehicle-course prediction calculation portion 30 calculates the vector azimuth angle shp (Step S111).

Next, the vehicle-course prediction calculation portion 30 determines whether a current traveling section of the railroad vehicle 11 is a straight section or a curved section based on speed information of the railroad vehicle 11 and a linearity determination value shp_thr for determining the straight section or the curved section stored in advance in the storage device 27 (Step S112).

That is, it is determined whether the vector azimuth angle shp is less than the linearity determination value shp_thr. When shp<shp_thr is satisfied in the determination at Step S112 (Yes at Step S112), the current train traveling section is the straight section, and thus the vehicle-course prediction calculation portion 30 outputs the determination result indicating the straight section (Step S113).

Subsequently, the vehicle-course prediction calculation portion 30 acquires a current stopped/traveling state and current speed information of the railroad vehicle 11 output by the travelling-state determination processing portion 24 (Step S114).

Further, the vehicle-course prediction calculation portion 30 specifies and acquires the current traveling position and the current traveling section of the railroad vehicle 11 based on a traveling history up to this point in time and a traveling-section database that is stored in advance in the storage device 27 (Step S115). The traveling-section database stores therein the shape of a traveling path and distance information for specifying the traveling section.

Next, speed limit data xspd_thr1 at the specified travel position in the specified travel section of the railroad vehicle 11 is read out from the storage device 27 and compared with a speed spd of the railroad vehicle 11, whereby it is determined whether the speed of the railroad vehicle 11 exceeds a speed limit (Step S116).

When pd<xspd_thr1 in the determination at Step S116 (No at Step S116), it is determined that the railroad vehicle 11 is traveling within a range of the speed limit. Therefore, the determination result indicating that the speed is within the speed limit is output, and the process is ended (Step S117).

When spd≥xspd_thr1 in the determination at Step S116 (Yes at Step S116), it is determined that the speed of the railroad vehicle 11 exceeds the speed limit. Therefore, the determination result indicating that the speed exceeds the speed limit and a current speed are output, and the process is ended (Step S118).

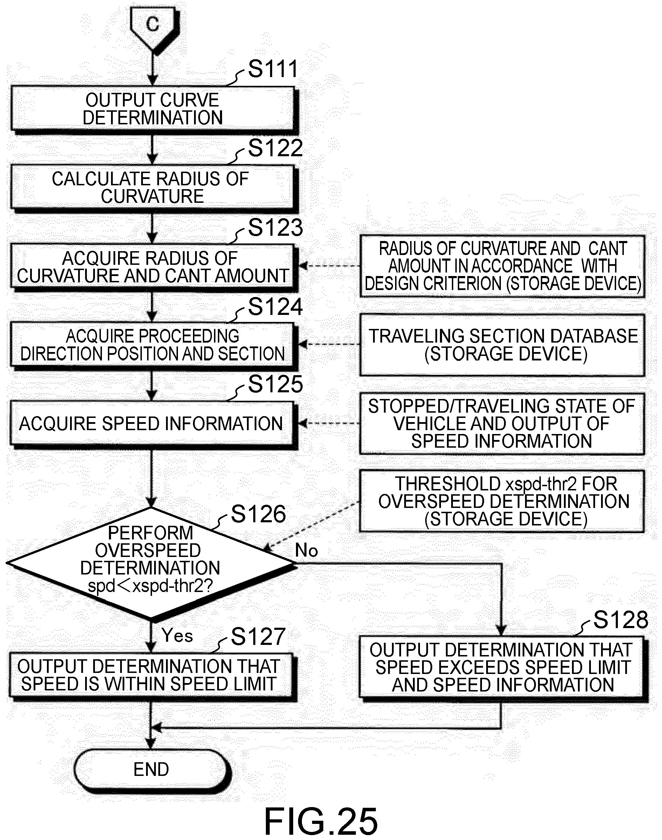

FIG. 25 is a flowchart of processing of a vehicle-course prediction calculation portion (part 3).

When shp≥shp-thr in the determination at Step S112 (No at Step S112), the current train traveling section is a curved section, and thus the vehicle-course prediction calculation portion 30 outputs the determination result indicating the curved section, as illustrated in FIG. 25 (Step S121).

Subsequently, the vehicle-course prediction calculation portion 30 calculates a curve radius (a radius of curvature) (Step S122), and acquires a cant amount corresponding to the curve radius calculated from a database representing a correspondence between a curvature radius and a cant amount based on a design criterion stored in advance in the storage device 27 (Step S123).

Further, the vehicle-course prediction calculation portion 30 specifies and acquires the current traveling position and the current traveling section of the railroad vehicle 11 based on a traveling history up to this point in time and a traveling-section database that is stored in advance in the storage device 27 (Step S124). The traveling-section database stores therein the shape of a traveling path and distance information for specifying the traveling section.

Subsequently, the vehicle-course prediction calculation portion 30 acquires a current stopped/traveling state and current speed information of the railroad vehicle 11 output by the travelling-state determination processing portion 24 (Step S125).

Next, speed limit data xspd-thr2 at a radius of curvature and the cant amount based on a design criterion at the specified traveling position in the specified travelling section of the railroad vehicle 11 which is a curved section is read out from the storage device 27 and compared with the speed spd of the railroad vehicle 11, whereby it is determined whether the speed of the railroad vehicle 11 exceeds a speed limit (Step S126).

When pd<xspd_thr2 in the determination at Step S126 (No at Step S126), it is determined that the railroad vehicle 11 is traveling within a range of speed limit. Therefore, the determination result indicating that the speed is within the speed limit is output, and the process is ended (Step S127).

When pd≥xspd-thr2 in the determination at Step S126 (Yes at Step S126), it is determined that the speed of the railroad vehicle 11 exceeds the speed limit. Therefore, the determination result indicating that the speed exceeds the speed limit and a current speed are output, and the process is ended (Step S128).

As described above, according to the present second embodiment, a traveling position of the railroad vehicle 11 is acquired, and a course of the railroad vehicle 11 is predicted from the acquired data. It is thus possible to provide data that can be used for setting a forward detection range, course prediction, detection of a traveling position, detection of an overspeed, and the like. In addition, it is possible to create a travel route map and expand it to support of traveling and support of creating railway facility information.

(Modification of second embodiment)

Although the second embodiment relates to a case of outputting overspeed information, the second embodiment can be also used for setting a range of a detection area in a case where an obstacle in front is detected by a camera or the like.

That is, in a case of a railroad, a detection area of a camera or the like is normally an area of a construction gauge on a track or a vehicle gauge of the railroad vehicle 11. However, when it is desired to permanently or temporarily expand a detection area of a station, a railroad crossing, or the like due to reconstruction, temporary construction, or the like, the position of a railroad section on which the railroad vehicle 11 is currently traveling can be obtained by positioning. Therefore, if a detection target position of the station, the railroad crossing, or the like is recorded in a traveling section database, the detection area can be expanded from a certain distance in front.

A configuration in which the three-axis sensor unit CSU includes a three-axis acceleration sensor, a three-axis gyro sensor, and a three-axis geomagnetic sensor has been described in the above descriptions. However, the three-axis geomagnetic sensor is not an essential component, and therefore the three-axis sensor unit CSU may be configured to include at least either one of the three-axis acceleration sensor and the three-axis geomagnetic sensor.

As described above, according to a device and a method of each embodiment, a reception elevation angle, a reception strength, and satellite selection are controlled, and determination whether to perform switching to autonomous measurement processing is performed, depending on the situation of a positioning signal from a population satellite or the like. It is thus possible to detect the position of the railroad vehicle 11 even in a situation where the reception environment is bad.

As a result, measurement accuracy, which is ±10 m at maximum in a conventional railroad environment due to a problem of multipath or the like, can be improved (for example, ±1 m), so that required accuracy can be achieved.

Further, a traveling position can be easily ascertained in a region where satellite reception is not available, for example, in tunnels, under station buildings on bridges or the like, or in underground sections.

Further, by acquiring the traveling position of the railroad vehicle 11 and predicting the course of the railroad vehicle 11 from the acquired data, it is possible to use the data for setting a forward detection range, predicting the course, detecting the traveling position, detecting an overspeed, and the like.

In addition, it is possible to create a travel route map and expand it to support of traveling and support of creating railway facility information.

The traveling position detection device for railroad according to the present embodiment has a hardware configuration using a general-purpose computer including a control device such as an MPU, a storage device such as a ROM or a RAM, an external storage device such as an HDD and CD drive device, a display device displaying various information, and an input device used for inputting various information.

A program executed on the traveling position detection device for railroad according to the present embodiment is provided as the program is recorded in a computer-readable recording medium such as a CD-ROM, a semiconductor recording device such as a USB memory device, and a DVD (Digital Versatile Disk) in a file of an installable format or an executable format.

It is possible to configure that the program executed on the traveling position detection device for railroad according to the present embodiment is stored in a computer connected to a network such as the Internet and provided by being downloaded via the network. Further, it is also possible to configure that the program executed on the traveling position detection device for railroad according to the present embodiment is provided or distributed via a network such as the Internet.

Further, it is also possible to configure that the program of the traveling position detection device for railroad according to the present embodiment is provided as it is incorporated in a ROM and the like in advance.

While certain embodiments of the present invention have been described, these embodiments have been presented by way of example only, and are not intended to limit the scope of the invention. The novel embodiments described herein may be embodied in a variety of other forms, and various omissions, substitutions, and changes may be made without departing from the spirit of the invention. These embodiments and modifications thereof would fall within the scope and spirit of the invention, and would fall within the invention described in the accompanying claims and their equivalents.

**Claims**

1. A position measurement device that measures a position of a vehicle, comprising:

a first positioning portion configured to receive a positioning signal from an artificial satellite and measure a first position of the vehicle;

a second positioning portion configured to measure a second position of the vehicle based on an output of a sensor for autonomous positioning; and

a determination portion configured to set the second position as the position of the vehicle at least either when the first position is in a range based on a predetermined position or when change in a proceeding direction of the vehicle is a predetermined amount.

2. The device of Claim 1, wherein the determination portion sets the first position as the position of the vehicle when the second position is in a range based on a predetermined position.

3. The device of Claim 1 or 2, wherein the determination portion sets one of the first position and the second position as the position of the vehicle depending on a reception state of the positioning signal.

4. The device of Claim 3, wherein at least any of an estimated horizontal position accuracy, a position dilution of precision, and a statistic indicating change with time of a reception strength is used as the reception state.

5. The device of any one of Claims 1 to 4, further comprising:

a reception-azimuth-angle setting portion configured to set a reception azimuth angle based on a proceeding direction of the vehicle and a reception state of a positioning signal from the artificial satellite; and

a satellite selection portion configured to select the artificial satellite that is an object of positioning in a range of the set reception azimuth angle, wherein

the first positioning portion receives a positioning signal from the selected artificial satellite.

6. The device of Claim 5, further comprising an elevation-angle setting portion configured to set an elevation-angle range for limiting the artificial satellite as the object of positioning among the artificial satellites located in the range of reception azimuth angle based on a time delay of the positioning signal or a reception signal strength of the positioning signal.

7. The device of any one of Claims 1 to 6, wherein the sensor for autonomous positioning includes, among a three-axis acceleration sensor, a three-axis gyro sensor, and a three-axis geomagnetic sensor, at least one of the three-axis acceleration sensor and the three-axis gyro sensor.

8. The device of Claim 1, wherein

the vehicle is a railroad vehicle, and

the determination portion sets the second position as the position of the vehicle when a position on a rail at which the vehicle travels is a position set based on any of a tunnel, a station building, inside of a garage, and an underground section.

9. The device of Claim 1, wherein the vehicle is a railroad vehicle, and the determination portion determines whether a change amount in a proceeding direction in a predetermined period of time is a predetermined amount.

10. The device of Claim 1, wherein

the vehicle is a railroad vehicle,

the sensor for autonomous positioning includes a three-axis gyro sensor, and

the device further comprises:

a vehicle-course prediction portion configured to, based on the received positioning signal and an output of the three-axis gyro sensor, calculate a proceeding direction angle of the railroad vehicle and an attitude angle of the railroad vehicle, calculate a proceeding-direction vector of the railroad vehicle in a set time, and determine whether the railroad vehicle is traveling in a straight section or a curved section;

a radius-of-curvature calculation portion configured to, when it is determined that the railroad vehicle is traveling in a curved section, calculate a radius of curvature of the curved section;

a storage device configured to store therein a radius of curvature and a cant amount in accordance with a design criterion in advance; and

a prediction portion configured to predict a course of the railroad vehicle based on the attitude angle, the proceeding-direction vector, and the radius of curvature and the cant amount in accordance with the design criterion which are read out from the storage device and correspond to a traveling position of the railroad vehicle.

11. The device of Claim 1, further comprising a first measurement portion configured to measure a first speed of the vehicle based on an output of the sensor for autonomous positioning, wherein
the determination portion sets the speed measured by the first measurement portion as a speed of the vehicle at least either when, based on the position measurement by the first positioning portion, the position of the vehicle is in a range based on a predetermined position or when a change amount in the proceeding direction within a predetermined distance is a predetermined amount.

12. The device of Claim 11, further comprising a second measurement portion configured to receive a signal from an artificial satellite and measure a second speed of the vehicle, wherein
the determination portion sets the speed measured by the second positioning portion as a speed of the vehicle when the position of the vehicle measured by the second positioning portion is in a range based on the predetermined position.

13. A speed measurement device comprising:

a first measurement portion configured to measure a first speed of the vehicle based on an output of a sensor for autonomous positioning;
a second measurement portion configured to receive a signal from an artificial satellite and measure a second speed of the vehicle; and
a determination portion configured to set one of the first speed and the second speed as a speed of the vehicle in accordance with at least either a state of a radio wave from the artificial satellite or a position of the vehicle.

14. A position measurement method for measuring a position of a vehicle, comprising:

a first positioning step of receiving a positioning signal from a satellite and measuring a position of the vehicle;
a second positioning step of measuring a position of the vehicle based on an output of a sensor for autonomous positioning; and
a determination step of setting, based on the position measurement at the first positioning step, the position measured at the second positioning step as the position of the vehicle when the position of the vehicle is in a range based on a predetermined position or when a change amount in a proceeding direction within a predetermined distance is a predetermined amount.

FIG. 1

FIG. 2

START

S11

RECEIVE POSITIONING SIGNAL

S12

ACQUIRE TIME SIGNAL

S13

ACQUIRE POSITION INFORMATION INCLUDING LATITUDE
INFORMATION AND LONGITUDE INFORMATION

S14

ACQUIRE NUMBER OF
POSITIONING SATELLITES

S15

ACQUIRE INFORMATION ON POSITIONING-SATELLITE
ELEVATION ANGLE AND RECEPTION STRENGTHS

S16

ACQUIRE POSITIONING-SATELLITE
DIRECTION ANGLES

S17

ACQUIRE OTHER SATELLITE
RECEPTION INFORMATION

S18

ACQUIRE DATA OF THREE-AXIS
ACCELERATION SENSOR

S19

ACQUIRE DATA OF THREE-AXIS
GYRO SENSOR

S20

ACQUIRE DATA OF THREE-AXIS
GEOMAGNETIC SENSOR

END

FIG. 3

FIG. 4

EP 4 155 780 A1

START

S500

SATELLITE POSITIONING
SPEED PROCESSING — Ⓒ

S31

ACQUIRE POSITIONING-
SATELLITE ELEVATION
ANGLE AND RECEPTION STRENGTH

S32

CALCULATE AND ACQUIRE
ESTIMATED POSITION ERROR ⟵---- EHPE (ESTIMATED HORIZONTAL POSITION ACCURACY)
PDOP (POSITION DILUTION OF PRECISION)

S33

SET RECEPTION AZIMUTH
ANGLE ⟵---- ORIENTATION OF TRAIN
PROCEEDING DIRECTION

DETERMINATION
THRESHOLD FOR
RECEPTION STRENGTH
(db_thr)
(STORAGE DEVICE) ----⟶

S34

db_thr<db? ⟶ Ⓐ
No

Yes

Ⓓ ⟵ Yes

S35

pdop<pdop. ⟵---- DETERMINATION THRESHOLD
FOR PDOP (pdop_hr)
(STORAGE DEVICE)

No

CALCULATE UPPER AND
LOWER LIMITS OF
ELEVATION ANGLE

S36

CONTROL (RESET)
ELEVATION ANGLE

S37

CALCULATE RECEPTION STRENGTH
AND PDOP CHRONOLOGICALLY

S38

db1_thr<db
pdop<pdop.

S39

Yes ⟶ CONTROL
(SET AND RESTORE)
ELEVATION ANGLE

S40

No

S37

CONTROL (RESET)
ELEVATION ANGLE

Ⓒ

## FIG. 5

FIG. 6

EP 4 155 780 A1

D

ACQUIRE CURRENT POSITION (BY GNSS OR AUTONOMOUS MEASUREMENT) — S610

ACQUIRE MAP DATA (DB) — S620

DETECT PROCEEDING ORIENTATION AT CURRENT POSITION — S630

COLLATE CURRENT POSITION AND MAP DATA — S640

IS VEHICLE IN INVISIBLE REGION? — S650

C ← No

Yes

SWITCH TO AUTONOMOUS MEASUREMENT — S47

B

FIG. 7

FIG. 8

EP 4 155 780 A1

FIG. 9

INBOUND PROCEEDING DIRECTION

TRAIN POSITION

SWITCHING TO AUTONOMOUS MEASUREMENT

SWITCHING TO GNSS

L1:LINE IN REAL SPACE

P1

P2

GNSS INVISIBLE REGION SUCH AS REGION IN TUNNEL OR UNDER STATION BUILDING

L3:PROCEEDING VECTOR

B3:COORDINATES (LATITUDE AND LONGITUDE) OF ENTRANCE TO SECTION FOR WHICH SWITCHING TO AUTONOMOUS MEASUREMENT IS PERFORMED BECAUSE OF LARGE VARIATIONS IN RECEPTION STRENGTH

COORDINATES (LATITUDE AND LONGITUDE) OF ENTRANCE TO SECTION FOR WHICH SWITCHING TO AUTONOMOUS MEASUREMENT IS PERFORMED BECAUSE OF LARGE SHIFT AMOUNT OF PROCEEDING VECTOR (ERROR WITH RESPECT TO PROCEEDING DIRECTION) R3

VARIATION IN RECEPTION STRENGTH

B4:POSITION AT WHICH RECEPTION STRENGTH IN GNSS BECOMES STABLE

SECTIONS CORRESPONDING TO GNSS AND AUTONOMOUS MEASUREMENT

S1:GNSS SECTION

S2:AUTONOMOUS MEASUREMENT SECTION

S3:GNSS SECTION

```
            (D)
             │
             ▼
┌─────────────────────────────┐
│ CALCULATE RECEPTION STRENGTH │──S910
│      CHRONOLOGICALLY         │
└─────────────────────────────┘
             │
             ▼
┌─────────────────────────────┐
│ ACQUIRE CURRENT POSITION (BY GNSS │──S920
│  OR AUTONOMOUS MEASUREMENT) │
└─────────────────────────────┘
             │
             ▼
┌─────────────────────────────┐
│ DETECT PROCEEDING ORIENTATION AT │──S930
│      CURRENT POSITION        │
└─────────────────────────────┘
             │
             ▼
┌─────────────────────────────┐
│   CALCULATE SHIFT AMOUNT OF  │──S940
│     PROCEEDING VECTOR        │
└─────────────────────────────┘
             │
             ▼
         ╱─────────╲
(C)◄────╱ IS VEHICLE IN ╲──S950
   No   ╲ INVISIBLE REGION? ╱
         ╲─────────╱
             │
            Yes
             ▼
┌─────────────────────────────┐
│   SWITCH TO AUTONOMOUS       │──S47
│      MEASUREMENT             │
└─────────────────────────────┘
             │
             ▼
            (B)
```

# FIG.10

START

ACQUIRE POSITIONING-SATELLITE ELEVATION ANGLE AND RECEPTION STRENGTH — S31

CALCULATE AND ACQUIRE ESTIMATED POSITION ERROR — S32

SET RECEPTION AZIMUTH ANGLE — S33

S810 — PERFORM DETERMINATION FOR RECEPTION STRENGTH (db) db<=db-thr?
- Yes
- No

S820 — PERFORM DETERMINATION FOR EHPE ehpe<ehpe-thr?
- Yes
- No

AUTONOMOUS-MEASUREMENT END COMMAND

END AUTONOMOUS MEASUREMENT — S830

C

E

CALCULATE RECEPTION STRENGTH CHRONOLOGICALLY — S910

ACQUIRE CURRENT POSITION (BY GNSS OR AUTONOMOUS MEASUREMENT) — S920

DETECT PROCEEDING ORIENTATION AT CURRENT POSITION — S930

CALCULATE SHIFT AMOUNT OF PROCEEDING VECTOR — S940

S960 — IS VEHICLE IN INVISIBLE REGION?
- No
- Yes

END AUTONOMOUS MEASUREMENT — S830

C

PERFORM AUTONOMOUS MEASUREMENT PROCESSING — S840

PERFORM AUTONOMOUS MEASUREMENT SPEED PROCESSING — S850

B

E

FIG.11

31

INBOUND PROCEEDING
DIRECTION
→

TRAIN POSITION

SWITCHING TO
AUTONOMOUS
MEASUREMENT

SWITCHING TO GNSS

L1:LINE IN REAL SPACE

COLLATE CURRENT
POSITION AND MAP
DATA SEQUENTIALLY

P1

P2

GNSS INVISIBLE REGION SUCH AS REGION
IN TUNNEL OR UNDER STATION BUILDING

L2 :LINE ON MAP

COORDINATES(LATITUDE AND LONGITUDE) OF
ENTRANCE TO SECTION FOR WHICH SWITCHING TO
AUTONOMOUS MEASUREMENT IS PERFORMED

COORDINATES (LATITUDE AND
LONGITUDE) OF ENTRANCE TO
SECTION FOR WHICH SWITCHING
TO GNSS IS PERFORMED

COORDINATES (LATITUDE AND LONGITUDE) OF ENTRANCE
TO SECTION FOR WHICH SWITCHING TO AUTONOMOUS
MEASUREMENT IS PERFORMED BECAUSE OF LARGE
VARIATIONS IN RECEPTION STRENGTH

VARIATION IN RECEPTION
STRENGTH

POSITION AT WHICH RECEPTION
STRENGTH IN GNSS BECOMES
STABLE

SECTIONS
CORRESPONDING
TO GNSS AND
AUTONOMOUS
MEASUREMENT

S1:GNSS SECTION

S2 :AUTONOMOUS MEASUREMENT
SECTION

S3 :GNSS SECTION

FIG.12

```
                    ┌───┐
                    │ D │
                    └───┘
                      │
                      ▼
      ┌──────────────────────────────────┐
      │   CALCULATE RECEPTION STRENGTH    │─── S910
      │        CHRONOLOGICALLY            │
      └──────────────────────────────────┘
                      │
                      ▼
      ┌──────────────────────────────────┐
      │  ACQUIRE CURRENT POSITION (BY GNSS│─── S610
      │    OR AUTONOMOUS MEASUREMENT)     │
      └──────────────────────────────────┘
                      │
                      ▼
      ┌──────────────────────────────────┐
      │ DETECT PROCEEDING ORIENTATION AT  │─── S630
      │        CURRENT POSITION           │
      └──────────────────────────────────┘
                      │
                      ▼
      ┌──────────────────────────────────┐
      │  COLLATE CURRENT POSITION AND     │─── S640
      │           MAP DATA                │
      └──────────────────────────────────┘
                      │
                      ▼
  ┌───┐            ◇─────────◇
  │ C │◄───────────   IS IT      ─── S1300
  └───┘    No      INVISIBLE REGION?
                     ◇─────────◇
                          │ Yes
                          ▼
             ┌──────────────────────────┐
             │  SWITCH TO AUTONOMOUS     │─── S47
             │      MEASUREMENT          │
             └──────────────────────────┘
                          │
                          ▼
                        ┌───┐
                        │ B │
                        └───┘
```

# FIG.13

START

CALCULATE RECEPTION STRENGTH CHRONOLOGICALLY —S910

ACQUIRE CURRENT POSITION (BY GNSS OR AUTONOMOUS MEASUREMENT —S610

DETECT PROCEEDING ORIENTATION AT CURRENT POSITION —S630

COLLATE CURRENT POSITION AND MAP DATA —S640

IS IT INVISIBLE REGION? —S1400

No

END AUTONOMOUS MEASUREMENT

C

S830

Yes

B →

PERFORM AUTONOMOUS MEASUREMENT PROCESSING —S840

PERFORM AUTONOMOUS MEASUREMENT SPEED PROCESSING —S850

E

E

ACQUIRE POSITIONING-SATELLITE ELEVATION ANGLE AND RECEPTION STRENGTH —S31

CALCULATE AND ACQUIRE ESTIMATED POSITION ERROR —S32

SET RECEPTION AZIMUTH ANGLE —S33

PERFORM DETERMINATION FOR RECEPTION STRENGTH (db) db<=db-thr? —S810

Yes

No

PERFORM DETERMINATION FOR EHPE ehpe<ehpe-thr? —S820

No

Yes

AUTONOMOUS-MEASUREMENT END COMMAND

END AUTONOMOUS MEASUREMENT —S830

C

FIG.14

START

S61
ACQUIRE POSITIONING-SATELLITE ELEVATION ANGLE AND RECEPTION STRENGTHS

S62
ACQUIRE SATELLITE ORBIT INFORMATION ◀--- SATELLITE ORBIT INFORMATION (ALMANAC AND EPHEMERIS)

S63
SET RECEPTION AZIMUTH ANGLE ◀--- ORIENTATION OF PROCEEDING DIRECTION OF TRAIN

S64
SELECT RECEPTION SATELLITE

END

FIG.15

( NORMAL SITUATION WHERE RECEPTION IS PERFORMED IN ALL DIRECTIONS (360°) )

FIG.16A

( EXAMPLE WHERE RECEPTION AREA IS SET (270°) )

FIG.16B

( SITUATION WHERE SATELLITE ARRANGEMENT DETERMINATION IS PERFORMED FOR RECEPTION AREA )

FIG.16C

35

DR : PROCEEDING DIRECTION OF TRAIN

AE

AN

# FIG.17

ZENITH

12E 12E

12E

12E

12E

12N21

12N22

12N1

12N1

12N1

HORIZON

BR

DR

13

BR

——— DIRECT WAVE

------ RADIO WAVE THAT DOES NOT REACH

— — REFLECTED WAVE ⎫
—--— DIFFRACTED WAVE ⎬ MULTIPATH
⎭

# FIG.18

FIG.19A

FIG.19B

EP 4 155 780 A1

START

ACQUIRE OUTPUT VALUE OF THREE-AXIS SENSOR — S71

PERFORM INITIAL-VALUE CALCULATION PROCESSING — S72

MONITOR CUMULATIVE ERROR OF OUTPUT VALUE OF THREE-AXIS SENSOR — S73

CALCULATE CORRECTION VALUE FROM OUTPUT VALUE OF THREE-AXIS SENSOR — S74

CALCULATE SPEED FROM OUTPUT VALUE OF THREE-AXIS SENSOR — S75

ACQUIRE SPEED FROM SATELLITE POSITIONING INFORMATION — S76

**FIG.20**

DETERMINATION THRESHOLD esn-thr FOR CUMULATIVE ERROR (STORAGE DEVICE)

S77 — PERFORM DETERMINATION OF CUMULATIVE ERROR esn < esn-thr?   No

Yes

S78 — SELECT SPEED CORRESPONDING TO OUTPUT VALUE OF THREE-AXIS SENSOR

S79 — SELECT SPEED CORRESPONDING TO SATELLITE POSITIONING INFORMATION

DETERMINATION THRESHOLD spd-thr FOR VEHICLE SPEED (STORAGE DEVICE)

S80 — DETERMINE WHETHER VEHICLE IS STOPPED OR TRAVELING spd < spd-thr?   No

Yes

S81 — OUTPUT STOPPED STATE OF RAILROAD VEHICLE AND SPEED INFORMATION

S82 — OUTPUT TRAVELING STATE OF RAILROAD VEHICLE AND SPEED INFORMATION

END

START

S91

CALCULATE AND ACQUIRE ESTIMATED POSITION ERROR ◄---- EHPE (ESTIMATED HORIZONTAL POSITION ACCURACY) PDOP (POSITION DILUTION OF PRECISION)

S92

PERFORM DETERMINATION FOR ESTIMATED POSITION ERROR pos < pos-thr? ◄----- DETERMINATION THRESHOLD pos-thr FOR POSITION ERROR (STORAGE DEVICE)

S93

ACQUIRE STOPPED /TRAVELING INFORMATION ◄---- STOPPED/TRAVELING STATE OF VEHICLE AND OUTPUT OF SPEED INFORMATION ----► ACQUIRE SPEED INFORMATION S96

S94

No ◄ sdp < sdp-thr? ◄----- DETERMINATION THRESHOLD sdp-thr FOR VEHICLE SPEED (STORAGE DEVICE)

CALCULATE AZIMUTH ANGLE FROM OUTPUT VALUE OF THREE-AXIS SENSOR S97

Yes S95

INITIALIZE OUTPUT OF THREE-AXIS SENSOR

CALCULATE TRAVEL VECTOR IN THREE-AXIS DIRECTIONS S98

ACQUIRE LATITUDE AND LONGITUDE POSITION INFORMATION ----► ACQUIRE CURRENT POSITION S99

CALCULATE CORRECTION AT CURRENT POSITION S100

END

FIG.21

13 :RECEIVING ANTENNA DEVICE

15 :RECEPTION OPERATION PROCESSING DEVICE

POSITIONING-SIGNAL OPERATION PROCESSING PORTION ~ 21

SATELLITE RECEPTION CONTROLLER ~ 22

STORAGE DEVICE ~ 27

TRAVELING-STATE DETERMINATION PROCESSING PORTION ~ 24

VEHICLE-POSITION CORRECTION PORTION ~ 25

AUTONOMOUS-MEASUREMENT-SWITCHING DETERMINATION PORTION ~ 26

COMMUNICATION CONNECTION DEVICE ~ 28

EXTERNAL DEVICE ~ 14

POSITIONING-SIGNAL-SPEED CALCULATION PORTION ~ 29

AUTONOMOUS-MEASUREMENT OPERATION PROCESSING ~ 23

COURSE PREDICTION CALCULATION PORTION ~ 30

THREE-AXIS SENSOR UNIT ~ CSU

FIG.22

EP 4 155 780 A1

START

S101
ACQUIRE AND STORE LATITUDE AND LONGITUDE POSITION INFORMATION ← CALCULATION OF CORRECTION AT CURRENT POSITION

S102
PERFORM CALCULATION OF AVERAGING POSITION INFORMATION ← AVERAGING TARGET TIME (STORAGE DEVICE)

S103
ACQUIRE PROCEEDING DIRECTION ANGLE OF VEHICLE ← ORIENTATION OF PROCEEDING DIRECTION OF VEHICLE

S104
CALCULATE VEHICLE ATTITUDE ANGLE ← ACQUIRE OUTPUT OF THREE-AXIS SENSOR

S105
ACQUIRE SPEED INFORMATION ← STOPPED/TRAVELING STATE OF VEHICLE AND SPEED INFORMATION

S106
CALCULATE AND STORE PROCEEDING-DIRECTION VECTOR

S107
PERFORM CALCULATION OF AVERAGING PROCEEDING-DIRECTION VECTOR ← VECTOR CALCULATION TARGET TIME (STORAGE DEVICE)

END

# FIG.23

START

S111

CALCULATE VECTOR
AZIMUTH ANGLE shp

DETERMINATION THRESHOLD
shp-thr FOR LINEARITY
(STORAGE DEVICE)

S112

No

PERFORM
DETERMINATION
FOR LINEARITY
shp > shp-thr?

C

Yes    S113

OUTPUT LINEARITY
DETERMINATION

S114

ACQUIRE SPEED INFORMATION

STOPPED/TRAVELING STATE
OF VEHICLE AND OUTPUT OF
SPEED INFORMATION

S115

ACQUIRE PROCEEDING DIRECTION
POSITION AND SECTION

TRAVELING SECTION
DATABASE
(STORAGE DEVICE)

THRESHOLD xspd-thr1 FOR
OVERSPEED DETERMINATION
(STORAGE DEVICE)

S116

PERFORM
OVERSPEED
DETERMINATION
spd < xspd-thr1?

No

S118

OUTPUT DETERMINATION THAT
SPEED EXCEEDS SPEED LIMIT
AND SPEED INFORMATION

Yes    S117

OUTPUT DETERMINATION THAT
SPEED IS WITHIN SPEED LIMIT

END

FIG.24

C

**S111**
OUTPUT CURVE
DETERMINATION

**S122**
CALCULATE RADIUS OF
CURVATURE

**S123**
ACQUIRE RADIUS OF
CURVATURE AND CANT AMOUNT ◄-----

RADIUS OF CURVATURE AND CANT
AMOUNT IN ACCORDANCE WITH
DESIGN CRITERION (STORAGE DEVICE)

**S124**
ACQUIRE PROCEEDING
DIRECTION POSITION AND SECTION ◄-----

TRAVELING SECTION DATABASE
(STORAGE DEVICE)

**S125**
ACQUIRE SPEED INFORMATION ◄-----

STOPPED/TRAVELING STATE OF
VEHICLE AND OUTPUT OF
SPEED INFORMATION

THRESHOLD xspd-thr2 FOR
OVERSPEED DETERMINATION
(STORAGE DEVICE)

**S126**
PERFORM
OVERSPEED
DETERMINATION
spd<xspd-thr2?

No

Yes **S127**
OUTPUT DETERMINATION THAT
SPEED IS WITHIN SPEED LIMIT

**S128**
OUTPUT DETERMINATION THAT
SPEED EXCEEDS SPEED LIMIT
AND SPEED INFORMATION

END

**FIG.25**

## INTERNATIONAL SEARCH REPORT

| International application No. |
|---|
| PCT/JP2021/016574 |

**A. CLASSIFICATION OF SUBJECT MATTER**
G01S 19/48(2010.01)i; B61L 25/02(2006.01)i; G01S 19/52(2010.01)i
FI: G01S19/48; G01S19/52; B61L25/02 G

According to International Patent Classification (IPC) or to both national classification and IPC

**B. FIELDS SEARCHED**

Minimum documentation searched (classification system followed by classification symbols)
G01S5/00-5/14, 19/00-19/55; B61L25/02

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/244683 A1 (TOSHIBA CORP.) 26 December 2019 (2019-12-26) paragraphs [0008]-[0048], [0057]-[0062], fig. 1-9, 11-12 | 13 |
| Y | | 1-12, 14 |
| Y | JP 2019-8646 A (KUBOTA CORP.) 17 January 2019 (2019-01-17) paragraph [0038] | 1-12, 14 |
| Y | JP 2019-189157 A (TOSHIBA CORP.) 31 October 2019 (2019-10-31) claims 2-3, 5, paragraphs [0011]-[0102], [0105], fig. 1-15 | 4-7, 10 |
| A | JP 2013-99234 A (MITSUBISHI ELECTRIC CORP.) 20 May 2013 (2013-05-20) paragraph [0024], fig. 5 | 1-12, 14 |

☒ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 June 2021 (29.06.2021) | 13 July 2021 (13.07.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/016574 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | WO 2018/021225 A1 (EIKURA TSUSHIN CO., LTD.) 01 February 2018 (2018-02-01) entire text | 1-12, 14 |
| A | WO 2018/034341 A1 (TOSHIBA CORP.) 22 February 2018 (2018-02-22) entire text | 1-12, 14 |

Form PCT/ISA/210 (continuation of second sheet) (January 2015)

**INTERNATIONAL SEARCH REPORT**
Information on patent family members

International application No.

PCT/JP2021/016574

| Patent Documents referred in the Report | Publication Date | Patent Family | Publication Date |
|---|---|---|---|
| WO 2019/244683 A1 | 26 Dec. 2019 | EP 3812193 A1 paragraphs [0008]-[0048], [0057]-[0062], fig. 1-9, 11-12 CN 112313109 A JP 2019-221081 A | |
| JP 2019-8646 A | 17 Jan. 2019 | (Family: none) | |
| JP 2019-189157 A | 31 Oct. 2019 | (Family: none) | |
| JP 2013-99234 A | 20 May 2013 | US 2013/0116864 A1 paragraph [0031], fig. 5 | |
| WO 2018/021225 A1 | 01 Feb. 2018 | JP 2018-16098 A | |
| WO 2018/034341 A1 | 22 Feb. 2018 | US 2019/0185033 A1 EP 3502748 A1 CN 109642955 A JP 2018-28516 A | |

Form PCT/ISA/210 (patent family annex) (January 2015)

**EP 4 155 780 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010100239 A
- JP 5973024 B
- JP 4121897 B
- JP 5185575 B